# FASCICULE DE BREVET EUROPEEN

(11) **EP 3 553 363 B1**
(45) Date de publication et mention de la délivrance du brevet: **09.09.2020**
(21) Numéro de dépôt: 19168583.3
(22) Date de dépôt: 11.04.2019
(51) Int. Cl.: F16L 37/23, F16L 37/34

(54) **ELÉMENT DE RACCORD ET RACCORD COMPRENANT UN TEL ÉLÉMENT DE RACCORD**
KUPPLUNGSELEMENT UND KUPPLUNGSVORRICHTUNG MIT SOLCHEM KUPPLUNGSELEMENT
COUPLING ELEMENT AND COUPLING DEVICE COMPRISING THIS COUPLING ELEMENT

(30) Priorité: 12.04.2018 FR 1853212
(43) Date de publication de la demande: 16.10.2019
(73) Titulaire: Staubli Faverges, 74210 Faverges-Seythenex (FR)
(72) Inventeur: TIBERGHIEN, Alain-Christophe, 74320 Sevrier (FR); DURIEUX, Christophe, 73200 Gilly sur Isere (FR); MAYER, Romain, 73400 Hery sur Ugine (FR)
(74) Mandataire: Lavoix

(56) Documents cités:
- EP-A1- 0 932 791
- EP-A1- 3 069 066
- DE-A1-102014 010 570

## Description

L'invention concerne un élément de raccord ainsi qu'un raccord comprenant un tel élément de raccord.

Les éléments de raccord permettent d'assurer facilement et rapidement une connexion étanche pour le transport d'un fluide, notamment un fluide sous pression. Deux éléments de raccord de type complémentaire, par exemple de type mâle et de type femelle, sont adaptés pour être accouplés afin de raccorder deux systèmes, tels que des canalisations, ou des réservoirs, ou des machines. En pratique, chaque élément de raccord comporte un corps qui délimite un conduit interne pour le passage du fluide. Un des éléments de raccord est connecté à une conduite de fluide sous pression située en amont, contenant par exemple de l'huile pouvant atteindre une pression de 150 à 450 bars.

Le brevet EP 0 932 791 B1 divulgue un élément de raccord connu, dans lequel une chambre intermédiaire est formée à l'intérieur du corps, entre la sortie de l'élément de raccord et une chambre arrière connectée à une conduite de fluide sous pression. L'élément de raccord comporte une soupape avant, une soupape principale et une soupape de sécurité actionnée par un poussoir mobile. La soupape avant recule lorsque l'élément de raccord est accouplé avec un élément de raccord complémentaire, ce qui fait coulisser le poussoir et ouvre la soupape de sécurité. La soupape avant vient ensuite en butée contre la soupape principale, ce qui ouvre la soupape principale.

La chambre intermédiaire permet, grâce à l'action de la soupape de sécurité, de laisser passer une faible quantité de fluide sous pression avant de déplacer la soupape principale vers sa position d'ouverture. Cela permet de réduire la pression dans la chambre arrière, en particulier si l'élément de raccord complémentaire est raccordé à un volume important à faible pression, et d'ouvrir la soupape principale avec moins d'efforts.

Toutefois, cet élément de raccord connu présente de nombreux inconvénients. En particulier, la position du poussoir est indéterminée au début de l'accouplement de l'élément de raccord. Il existe ainsi un risque que dans certains cas, le poussoir reste dans une position dans laquelle il actionne l'ouverture de la soupape principale sans avoir préalablement ouvert la soupape de sécurité. Lors du désaccouplement, un coincement accidentel du poussoir dans la soupape principale pourrait maintenir la soupape de sécurité ouverte, laissant la chambre intermédiaire à la même pression que la chambre arrière lorsque l'élément de raccord est désaccouplé. Cela peut rendre la soupape avant difficile à ouvrir et l'élément de raccord difficile à ré-accoupler par la suite.

L'invention vise donc à proposer un élément de raccord qui remédie aux inconvénients précités.

A cet effet, l'invention concerne un élément de raccord fluidique, comportant :
- un corps qui délimite un conduit interne s'étendant le long d'un axe longitudinal, le conduit interne comprenant une chambre arrière et une chambre intermédiaire, laquelle débouche sur un orifice avant du conduit interne ;
- une soupape principale mobile en translation dans la chambre arrière entre une position de fermeture, dans laquelle la soupape principale est en butée avant contre le corps, et une position d'ouverture dans laquelle un passage principal est ménagé entre la soupape principale et le corps pour la communication de fluide entre la chambre arrière et la chambre intermédiaire ;
- une soupape avant, mobile en translation dans la chambre intermédiaire entre une position de fermeture et une position d'ouverture de l'orifice avant, la soupape avant étant repoussée vers la position de fermeture par un premier ressort ;
- une soupape de sécurité, mobile en translation entre une position d'ouverture d'un passage secondaire ménagé à travers la soupape principale entre la chambre arrière et la chambre intermédiaire et une position de fermeture du passage secondaire, dans laquelle la soupape de sécurité est en butée avant contre la soupape principale ;
- un poussoir mobile dans le corps entre une position avancée et une position reculée, le poussoir étant mobile par rapport à la soupape de sécurité le long de l'axe longitudinal;
   l'élément de raccord étant agencé de telle sorte que, lors d'un accouplement avec un élément de raccord complémentaire au cours duquel la soupape avant est déplacée vers sa position d'ouverture de l'orifice avant, la soupape avant vient au contact du poussoir et déplace le poussoir vers la position reculée, le poussoir venant au contact de la soupape de sécurité et la déplaçant en position d'ouverture du passage secondaire avant que la soupape principale ne soit déplacée vers sa position d'ouverture.

Conformément à l'invention, l'élément de raccord comporte un deuxième ressort, disposé dans la chambre intermédiaire en appui sur le corps et sur une pièce d'appui du poussoir et repoussant le poussoir vers la position avancée. Dans la position avancée du poussoir, la soupape principale et la soupape de sécurité sont en position de fermeture, et le poussoir est en butée avant contre la soupape principale ou contre la soupape de sécurité.

Grâce à l'invention, du fait que le poussoir est mobile axialement par rapport à la soupape de sécurité, et donc dissocié de la soupape de sécurité, il est possible de construire un poussoir long et donc d'obtenir une course d'accouplement entre l'élément de raccord et un élément de raccord complémentaire qui est plus faible, pour un volume de chambre intermédiaire identique, sans nuire à l'étanchéité de la soupape de sécurité au niveau de son siège. De plus, la mise en butée avant du poussoir sur la soupape de sécurité ou sur la soupape principale lorsque le poussoir est dans sa position avancée garantit une course minimale de la soupape avant préalablement à l'actionnement du poussoir, à l'ouverture de la soupape de sécurité et à l'ouverture de la soupape principale au cours de la phase d'accouplement, ce qui permet que la communication fluidique entre les éléments de raccord mâle et femelle s'ouvre avant la présence de fluide sous pression de la chambre intermédiaire. Enfin, placer le deuxième ressort dans la chambre intermédiaire permet de limiter l'effet du fluide sous pression sur le ressort et d'obtenir une construction plus compacte de l'élément de raccord.

Selon des aspects avantageux mais non obligatoires de l'invention, un tel élément de raccord peut incorporer une ou plusieurs des caractéristiques suivantes, prises isolément ou suivant toute combinaison techniquement admissible :
- Dans la position avancée, le poussoir est en butée avant contre la soupape principale et l'élément de raccord comporte un troisième ressort qui rappelle la soupape de sécurité dans sa position de fermeture du passage secondaire.
- Le troisième ressort est interposé entre la soupape de sécurité et la soupape principale.
- Le poussoir est en butée avant contre la soupape principale par l'intermédiaire d'au moins une bille logée dans une rainure longitudinale de la soupape principale et dans une gorge périphérique du poussoir.
- Dans la position avancée, le poussoir est en butée avant contre la soupape de sécurité et une tige avant de la soupape de sécurité, dépassant en avant de la soupape principale, est engagée dans le poussoir.
- L'élément de raccord est agencé de telle sorte que, lors d'un accouplement avec un élément de raccord complémentaire, le poussoir ou la soupape de sécurité vient au contact de la soupape principale pour déplacer la soupape principale depuis sa position de fermeture vers sa position d'ouverture.
- Le premier ressort est disposé en appui sur la soupape avant et sur la pièce d'appui du poussoir.
- Le premier ressort et le deuxième ressort sont des ressorts hélicoïdaux à compression dont les spires sont alignées le long de l'axe longitudinal et disposées en position radiale externe dans le conduit interne.
- La force de rappel exercée par le deuxième ressort lorsque le poussoir est en position avancée est supérieure à la force de rappel exercée par le premier ressort lorsque la soupape avant et la soupape principale sont en position d'ouverture.
- La pièce d'appui du poussoir est adaptée pour guider radialement le poussoir à l'intérieur du corps dans son mouvement entre la position avancée et la position reculée, la pièce d'appui du poussoir étant placée sensiblement au milieu de la longueur libre du poussoir lorsque la soupape de sécurité est en position ouverte.
- En position d'ouverture et en position de fermeture de l'orifice avant, la soupape avant coopère avec le corps ou avec un élément solidaire du corps avec un jeu radial qui est inférieur à un jeu radial entre le corps, respectivement l'élément solidaire du corps, et la soupape avant dans une position intermédiaire de la soupape avant entre la position de fermeture et la position d'ouverture de l'orifice avant.
- L'élément de raccord comporte une pièce arrière disposée dans la chambre arrière et guidant radialement la soupape principale, la pièce arrière formant une butée arrière au déplacement de la soupape principale dans le corps.
- La soupape avant est apte à venir au contact du poussoir uniquement dans une direction parallèle à l'axe longitudinal.
- La pièce d'appui est une pièce distincte du poussoir qui est maintenue en butée avant contre le poussoir par le deuxième ressort.

Selon un autre aspect, l'invention concerne également un raccord comportant un élément de raccord mâle et un élément de raccord femelle de formes complémentaires et aptes à s'emmancher l'un avec l'autre pour assurer une connexion fluidique d'un conduit interne de l'élément mâle avec un conduit interne de l'élément femelle, au moins un des raccords mâle et femelle étant tel que décrit précédemment, et la somme :
- de la distance le long de l'axe longitudinal entre la soupape avant en position de fermeture de l'orifice avant et le poussoir en position avancée,
- et de la distance le long de l'axe longitudinal entre le poussoir en position avancée et la soupape de sécurité en position de fermeture,
est supérieure à la course d'ouverture de la soupape avant pour la communication fluidique entre le conduit interne de l'élément mâle et le conduit interne de l'élément femelle.

L'invention sera mieux comprise et d'autres avantages de celle-ci apparaîtront plus clairement à la lumière de la description qui va suivre, d'un mode de réalisation d'un élément de raccord donnée uniquement à titre d'exemple et faite en référence aux dessins annexés, dans lesquels :
- la figure 1 est une illustration schématique, selon une vue en coupe longitudinale, un élément de raccord de type mâle selon un premier mode de réalisation de l'invention ;
- la figure 2 est une illustration schématique d'une vue en coupe transversale de l'élément de raccord de la figure 1 selon le plan II-II ;
- la figure 3 est une vue agrandie de la zone III de la figure 1 ;
- la figure 4 est une illustration schématique d'une vue éclatée d'une portion de l'élément de raccord de la figure 1 ;
- la figure 5 est une illustration schématique d'un élément de raccord de type femelle adapté pour être accouplé avec l'élément de raccord de la figure 1 ;
- les figures 6 et 7 sont des illustrations schématiques des éléments de raccords des figures 1 à 5 lors de différentes phases d'accouplement ;
- la figure 8 est une illustration schématique des éléments mâle et femelle des figures 6 et 7 accouplés entre eux ;
- la figure 9 est une illustration schématique, selon une vue en coupe longitudinale d'un élément de raccord mâle selon un deuxième mode de réalisation de l'invention ;
- la figure 10 est une illustration schématique de l'élément de raccord de la figure 8 en cours d'accouplement avec un élément de raccord complémentaire ;
- la figure 11 est une représentation schématique des éléments de raccord des figures 9 et 10 dans une configuration accouplée ;
- la figure 12 est une représentation schématique d'un raccord comprenant des éléments de raccord mâle et femelle selon un troisième mode de réalisation de l'invention;
- la figure 13 est une représentation schématique du raccord de la figure 12 dans lequel la soupape de sécurité est dans une position d'ouverture ;
- la figure 14 est une représentation schématique du raccord des figures 12 et 13 illustré dans une configuration accouplée.

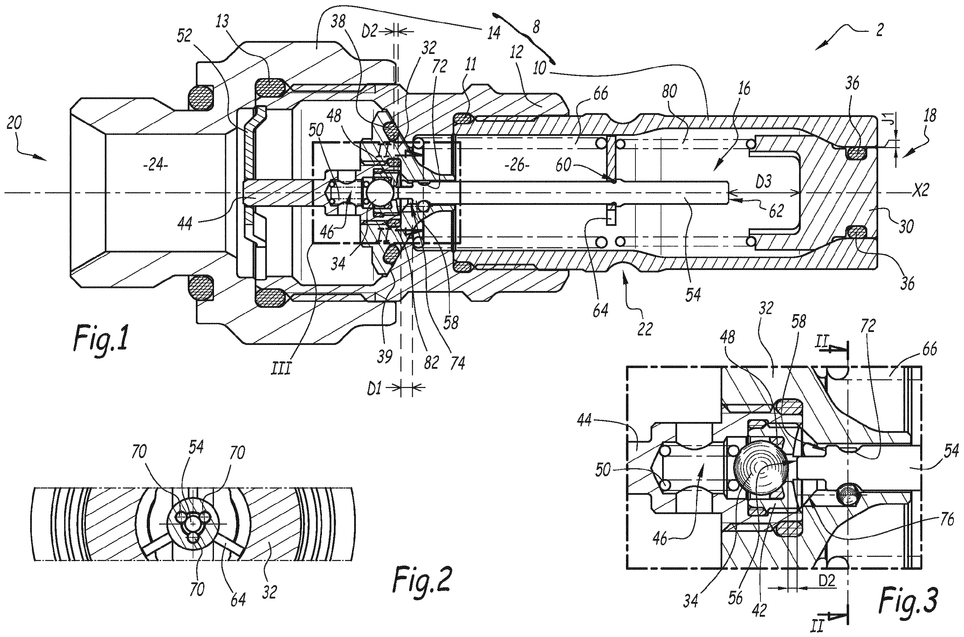

Les figures 1 à 8 représentent un premier mode de réalisation de l'invention, dans lequel un élément de raccord mâle 2 fluidique est adapté pour être accouplé par emmanchement dans un élément de raccord femelle 4 fluidique pour former un raccord 6 autorisant la circulation d'un fluide.

Le raccord 6 permet ainsi de raccorder de façon étanche et réversible deux systèmes tels que des conduites ou des réservoirs, pour autoriser la circulation d'un fluide, notamment d'un fluide sous pression, tel que de l'huile.

Comme illustré sur la figure 1, l'élément mâle 2 comporte un corps mâle 8 incluant une partie avant 10, une partie intermédiaire 12 et une partie arrière 14 imbriquées entre elles de façon étanche. Un joint d'étanchéité 11 est intercalé entre les parties 10 et 12, tandis qu'un joint d'étanchéité 13 est intercalé entre les parties 12 et 14.

Le corps mâle 8 délimite un conduit interne 16 qui s'étend entre un orifice avant 18, ou ouverture avant, et un orifice arrière 20 ou ouverture arrière.

Dans l'exemple illustré, la partie avant 10 comporte une gorge de verrouillage 22 périphérique externe qui fait partie d'un dispositif de verrouillage décrit plus en détail dans ce qui suit.

Les parties avant 10, intermédiaire 12 et arrière 14 sont alignées coaxialement le long d'un axe longitudinal X2 de l'élément mâle 2. Le corps mâle 8 présente avantageusement une symétrie de révolution axiale autour de l'axe longitudinal X2. Par exemple, l'élément mâle 2 présente une forme essentiellement tubulaire s'étendant le long de l'axe longitudinal X2.

Le conduit interne 16 comporte une chambre arrière 24 et une chambre intermédiaire 26. La chambre arrière 24 s'étend entre l'orifice arrière 20 et la chambre intermédiaire 26. La chambre intermédiaire 26 s'étend entre la chambre arrière 24 et l'orifice avant 18. La chambre arrière 24 contient ici un fluide sous pression. Par exemple, l'élément 2 est raccordé par son orifice arrière 20 à une conduite ou à un réservoir de fluide sous pression, qui n'est pas illustré.

Au sens de la présente description, le qualificatif « avant » d'un élément de raccord désigne l'extrémité de cet élément de raccord qui est tournée vers un élément de raccord complémentaire au début de l'accouplement de ces deux éléments de raccord. Dans un élément de raccord, une pièce est en « butée avant » contre une autre pièce lorsque la pièce vient au contact de l'autre pièce dans une direction dirigée vers l'avant de l'élément de raccord. Le qualificatif « arrière » désigne l'extrémité de cet élément de raccord qui est opposée à l'avant. Dans un élément de raccord, une pièce est en « butée arrière » contre une autre pièce lorsque la pièce vient au contact de l'autre pièce dans une direction dirigée vers l'arrière de l'élément de raccord. Dans l'exemple illustratif de l'élément 2, le fluide sous pression est prévu pour s'écouler d'amont en aval depuis l'arrière vers l'avant de l'élément 2. Ce sens de circulation peut être inversé selon l'application.

L'élément mâle 2 comprend également une soupape avant 30, une soupape principale 32 et une soupape de sécurité 34, disposées à l'intérieur du corps 8.

La soupape avant 30 présente la forme d'une pièce de révolution autour de l'axe longitudinal X2. La soupape avant 30 est mobile en translation par rapport au corps mâle 8 dans la chambre intermédiaire 26 le long de l'axe longitudinal X2 entre une position de fermeture de l'orifice avant 18 et une position d'ouverture de l'orifice avant 18. Dans l'exemple illustré, un joint d'étanchéité 36, par exemple en forme de joint torique, est interposé radialement entre la soupape avant 30 et le corps mâle 8 lorsque la soupape avant 30 est dans sa position de fermeture, ce qui permet de fermer le conduit interne 16. Par exemple, le joint 36 est reçu dans une gorge périphérique de la soupape avant 30. Le joint 36 est ici réalisé en matériau élastomère.

La face avant de la soupape avant 30 et la face avant du corps mâle 8 sont alignées entre elles lorsque la soupape avant 30 est dans la position de fermeture et que l'élément mâle 2 est désaccouplé.

Au sens de la présente description, le terme « radialement » est défini par rapport à l'axe longitudinal X2. Ainsi, une direction dite radiale est perpendiculaire à l'axe X2. Les termes « longitudinal » et « axial » sont définis par rapport à l'axe longitudinal X2. Ainsi, une direction dite longitudinale ou axiale est parallèle à l'axe longitudinal X2.

La soupape principale 32 est mobile en translation par rapport au corps mâle 8 dans la chambre arrière 24 le long de l'axe X2 entre une position de fermeture et une position d'ouverture. Dans la position de fermeture, la soupape principale 32 ferme la chambre arrière 24 sur l'avant en venant en butée axiale contre le corps 8.

La soupape principale 32 comporte ici un joint d'étanchéité 38, par exemple en forme d'anneau, qui est en butée avant contre un siège 39 formé par le corps mâle 8 lorsque la soupape principale 32 est dans sa position de fermeture. Par exemple, lorsque les soupapes 30 et 32 sont chacune en position de fermeture, elles ferment la chambre intermédiaire 26 et l'isolent de la chambre arrière 24. Le joint 38 est ici réalisé en matériau élastomère.

En position d'ouverture, la soupape principale 32 est dans une position reculée par rapport à sa position de fermeture et un passage principal 37 de fluide est ménagé entre le siège 39 et la soupape principale 32, autour de la soupape principale 32, pour la communication fluidique entre la chambre arrière 24 et la chambre intermédiaire 26.

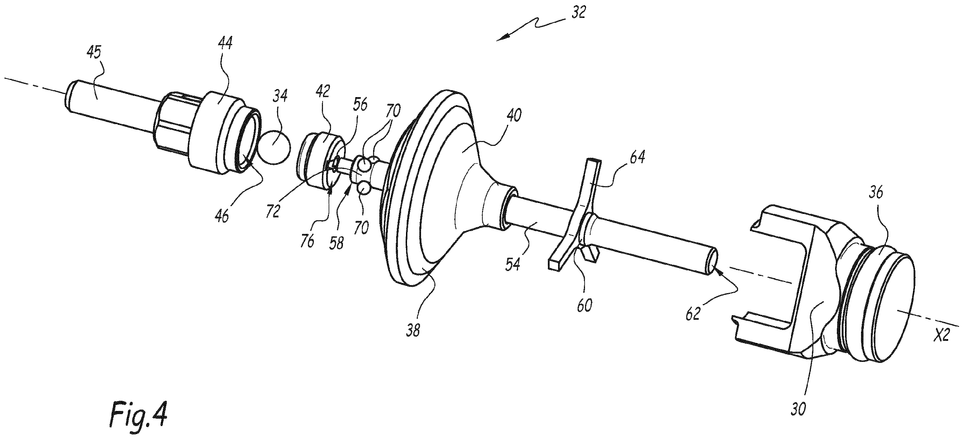

Selon des modes de mise en oeuvre préférés, comme illustré sur la figure 4, la soupape principale 32 comporte un corps central 40, un corps intermédiaire 42 et un corps arrière 44 alignés le long de l'axe X2.

Dans l'exemple illustré, le joint d'étanchéité 38 est reçu dans le corps principal 40. Le corps arrière 44 est vissé dans le corps principal 40. De même, le corps intermédiaire 42 est vissé en butée contre le corps arrière 44.

Le corps principal 40 est percé longitudinalement de part en part pour former un passage central qui, lorsque la soupape principale 32 est montée à l'intérieur du corps mâle 4, s'étend le long de l'axe longitudinal X2 en débouchant sur l'avant de la soupape principale 32 dans la chambre intermédiaire 26 d'une part, et dans un deuxième passage central correspondant du corps intermédiaire 42 et du corps arrière 44 d'autre part, ce deuxième passage central débouchant radialement dans la chambre arrière 24 au niveau du corps arrière 44. Ces différents passages centraux forment collectivement un passage secondaire 46 ménagé au travers de la soupape principale 32 entre la chambre arrière 24 et la chambre intermédiaire 26.

Selon d'autres variantes, la soupape principale 32 peut être monobloc.

La soupape de sécurité 34 est logée à l'intérieur de la soupape principale 32. La soupape de sécurité 34 est mobile en translation par rapport à la soupape principale 32 le long de l'axe longitudinal X2 entre une position de fermeture et une position d'ouverture. Dans sa position de fermeture, la soupape de sécurité 34 ferme le passage secondaire 46 entre la chambre arrière 24 et la chambre intermédiaire 26 en venant en butée avant contre un siège 48 formé par un joint d'étanchéité monté sur le corps intermédiaire 42 de la soupape principale 32. Dans sa position d'ouverture, la soupape de sécurité 34 ouvre ce passage secondaire 46.

Les joints 38 et 48 sont des joints de contact, c'est-à-dire qu'ils viennent en coopération axiale avec respectivement le siège 39, la soupape de sécurité 34, quand les soupapes de sécurité et principale sont en position de fermeture, afin de limiter les frottements, en opposition avec des joints de coopération radiale tels que le joint 36.

Dans cet exemple, la soupape de sécurité 34 est logée à l'intérieur du passage secondaire 46 pour ouvrir ou fermer le passage secondaire 46 selon qu'elle se trouve dans sa position d'ouverture ou de fermeture. On comprend donc que la chambre arrière 24 et la chambre intermédiaire 26 peuvent être mises en communication fluidique par l'intermédiaire du passage secondaire 46 même lorsque la soupape principale 32 est en position de fermeture. Le diamètre d'étanchéité de la soupape de sécurité 34 au niveau du joint 48 est inférieur au diamètre d'étanchéité de la soupape principale 32 au niveau du joint 38, en l'occurrence plus de cinq fois inférieur. Ainsi l'effort d'ouverture de la soupape de sécurité 34 à l'encontre de la pression du fluide présent dans la chambre arrière 24 sera moindre que l'effort d'ouverture de la soupape principale 32 à l'encontre de la même pression du fluide dans la chambre arrière 24.

De préférence, la soupape de sécurité 34 est une bille en matière métallique disposée à l'intérieur du passage secondaire 46.

L'élément 2 comporte un ressort 50 qui repousse la soupape de sécurité 34 dans sa position de fermeture en butée contre le siège 48. Par exemple, le ressort 50 est interposé entre la soupape de sécurité 34 et le corps arrière 44 de la soupape principale 32. De préférence, le ressort 50 est un ressort hélicoïdal à compression monté coaxialement avec l'axe X2.

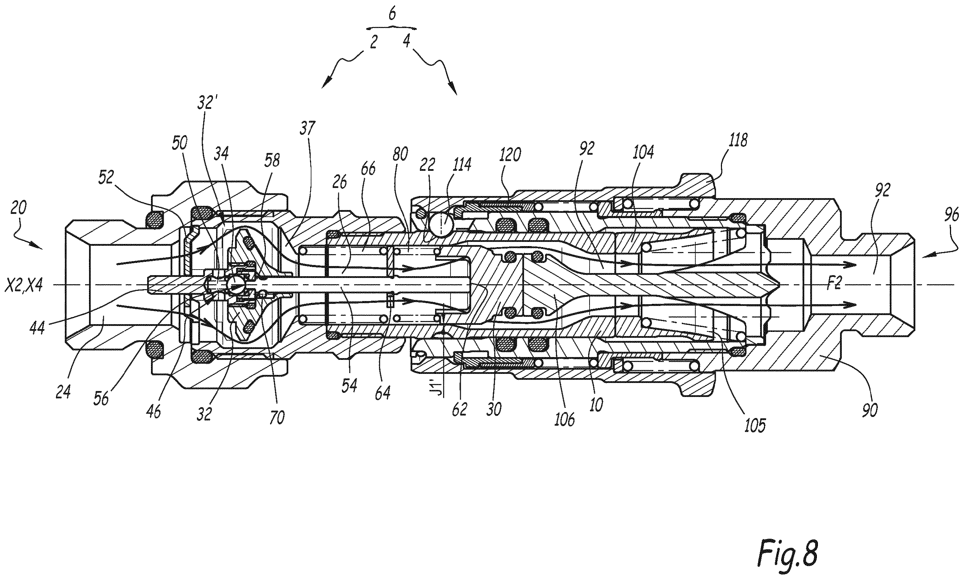

Le corps arrière 44 de la soupape principale 32 est ici prolongé par une tige arrière 45 s'étendant selon l'axe X2. La tige arrière 45 est engagée et guidée radialement dans une pièce arrière 52 logée dans la chambre arrière 24. Par exemple, la pièce arrière 52 est bloquée longitudinalement dans le corps 8, c'est-à-dire qu'elle ne peut pas se déplacer en translation le long de l'axe X2. La pièce arrière 52 est de préférence une étoile, c'est-à-dire une pièce mécanique rigide incluant des bras, ici au nombre de trois, disposés radialement en forme d'étoile autour d'une ouverture centrale qui reçoit une partie de la soupape principale 32, en l'occurrence, ici, qui reçoit la tige arrière 45 tout au long du déplacement de la soupape principale 32 entre sa position de fermeture et sa positon d'ouverture. De plus la pièce arrière 52 forme une butée arrière pour la soupape principale 32. En effet, la soupape principale 32 en position d'ouverture peut être entraînée vers l'arrière par le débit de fluide, et la soupape principale 32 en butée arrière contre la pièce arrière 52 garantit une section de passage de fluide non nulle suffisante autour de la soupape principale 32 dans le corps mâle 8. La position occupée par la soupape principale 32 en butée arrière contre la pièce arrière 52 est représentée par le trait fin 32' sur la figure 8.

L'élément 2 comporte également un poussoir 54 destiné à actionner la soupape de sécurité 34. Le poussoir 54 est mobile en translation le long de l'axe X2 par rapport à la soupape de sécurité 34 et par rapport à la soupape principale 32. En d'autres termes, le poussoir 54 n'est pas réalisé d'un seul tenant avec la soupape de sécurité 34.

Dans cet exemple, le poussoir 54 est logé partiellement dans la soupape principale 32. Par exemple, le poussoir 54 s'étend à l'avant de la soupape principale 32 en étant reçu au moins partiellement dans le passage secondaire 46 du corps principal 40 de la soupape principale 32. Le poussoir 54 peut se déplacer par rapport au corps mâle 8 entre une position avancée et une position reculée. Le poussoir 54 actionne la soupape de sécurité 34, c'est-à-dire qu'il l'ouvre, lorsqu'il est déplacé vers sa position reculée.

Le poussoir 54 comporte ici un corps longiligne en forme de tige ou de cylindre plein qui s'étend selon l'axe X2 et qui présente avantageusement une symétrie axiale de révolution autour de l'axe longitudinal X2. Le diamètre externe du poussoir 54 est de l'ordre de 3 mm. De préférence, le poussoir 54 comporte trois surfaces axiales, c'est-à-dire trois surfaces perpendiculaires à l'axe X2, incluant une face arrière 56, un épaulement arrière 58 et un épaulement intermédiaire 60 qui sont tournés vers l'arrière de l'élément 2. Le poussoir 54 comporte également une face avant 62.

L'élément 2 comporte également une rondelle 64 jouant un rôle de pièce d'appui du poussoir. Dans cet exemple, la pièce d'appui 64 est reçue à l'intérieur du corps 4, précisément à l'intérieur de la chambre intermédiaire 26. La pièce d'appui 64 peut se déplacer en translation le long de l'axe X2 à l'intérieur de la chambre intermédiaire 26, en étant guidée radialement par les parois internes de la partie avant 10.

Dans la suite, on appelle pièce d'appui du poussoir une partie monobloc avec le poussoir ou une partie montée sur le poussoir de manière que la pièce d'appui est apte à venir en butée avant contre le poussoir.

La pièce d'appui 64 comporte de préférence une ouverture centrale au travers de laquelle passe le poussoir 54. Selon des modes de réalisation, la pièce d'appui 64 est une étoile comportant trois branches s'étendant radialement autour de l'ouverture centrale à l'intérieur de laquelle est reçu le poussoir 54. De préférence, la pièce d'appui 64 est disposée en arrière de l'épaulement intermédiaire 60 du poussoir 54. On comprend donc que la pièce d'appui 64 n'est pas bloquée en translation vers l'arrière le long du poussoir 54 entre l'épaulement intermédiaire 60 et le corps principal 40.

Le corps 2 comporte également un ressort 66 qui repousse et maintient la pièce d'appui 64 vers l'avant contre l'épaulement intermédiaire 60. Ce ressort 66 prend appui en arrière sur le corps 4 et prend appui en avant sur la pièce 64. Ainsi, le ressort 66 repousse le poussoir 54 vers sa position avancée jusqu'à ce qu'il arrive en butée contre la soupape principale 32. Par exemple, le ressort 66 est un ressort hélicoïdal à compression monté coaxialement avec l'axe X2.

Comme illustré sur la figure 2, dans cet exemple, la butée axiale entre le poussoir 54 et la soupape principale 32 est assurée par une ou plusieurs billes 70 de butée, en l'occurrence trois billes 70, logées dans une gorge périphérique 72 du poussoir 54. La gorge périphérique 72 présente une forme circulaire qui s'étend sur la périphérie extérieure du poussoir 54 autour de l'axe X2. Ainsi, les billes 70 sont solidaires en translation avec le poussoir 54. Chaque bille 70 est également en prise avec une rainure longitudinale 74 portée par la soupape principale 32, ici formée au niveau de la surface délimitant le passage secondaire 46 dans le corps principal 40. Les rainures longitudinales 74 s'étendent parallèlement avec l'axe X2, sont ouvertes sur l'arrière et sont fermées vers l'avant, c'est-à-dire qu'elles comportent un mur ou surface terminale formant une butée empêchant la bille 70 de se déplacer plus en avant dans la rainure longitudinale 74 le long de l'axe X2.

En variante, la butée du poussoir 54 contre la soupape principale 32 peut être formée différemment.

Lorsque le poussoir 54 se déplace vers l'avant et atteint sa position avancée, les billes 70 viennent en butée contre la surface terminale des rainures longitudinales 74 et limitent le déplacement vers l'avant du poussoir 54 par rapport au corps mâle 8 et par rapport à la soupape principale 32. En position avancée, le poussoir 54 est donc en butée avant contre la soupape principale 32. La face arrière 56 du poussoir 54 est alors à une distance D2 non nulle de la soupape de sécurité 34, la soupape de sécurité 34 étant dans sa position de fermeture. L'épaulement arrière 58 du corps du poussoir 54 se trouve alors à une distance D1 non nulle d'une face avant 76 du corps intermédiaire 42. La distance D3 correspond à la distance entre la face avant 62 du poussoir 54 et une face arrière de la soupape avant 30 lorsque le poussoir 54 est dans la position avancée, que la soupape avant 30 et la soupape principale 32 sont fermées. La distance D3 est non nulle. Les distances D1, D2 et D3 sont prises le long de l'axe longitudinal X2.

Une partie du poussoir 54 est disposée avec un jeu réduit à l'intérieur du corps principal 40 pour assurer un guidage radial du poussoir 54 par rapport à la soupape principale 32.

Comme cela est illustré sur la figure 8, La longueur « L1 » représente la longueur libre du poussoir 54, mesurée selon l'axe X2 depuis la face avant du corps principal 40 jusqu'à la face avant 62 du poussoir 54 dans la configuration où la soupape de sécurité est ouverte. La longueur « L2 » représente la distance, mesurée selon l'axe X2, entre la face avant du corps principal 40 et un plan milieu P64 de la pièce d'appui 64 dans cette même configuration. Dans la configuration illustrée, la longueur L2 est égale à la moitié de la longueur L1, de préférence égale à 0,4 à 0,6 fois la longueur L1. En d'autres termes, la pièce d'appui 64 est sensiblement placée au milieu de la longueur libre L1 du poussoir 54 lorsque la soupape de sécurité 34 est en position ouverte. Cela permet de limiter le flambage du poussoir 54 même si la section du poussoir 54 est faible.

De retour à la figure 1, l'élément 2 comporte également un ressort 80 qui repousse la soupape avant 30 vers sa position de fermeture. Par exemple, le ressort 80 est intercalé entre la soupape avant 30 et la pièce d'appui 64, en appui sur une face de la pièce d'appui 64 qui est orientée à l'opposé de la face d'appui du ressort 66. Le ressort 80 est ici un ressort hélicoïdal à compression disposé coaxialement avec l'axe X2.

De préférence, les spires des ressorts 66 et 80 sont alignées le long de l'axe X2, ce qui accroit la compacité radiale de l'élément mâle 2. Les spires des ressorts 66 et 80 sont ici disposées en position radiale externe dans la chambre intermédiaire 26, ce qui permet que leur fonctionnement ne soit pas entravé lorsque le fluide circule autour du poussoir 54.

Avantageusement, la force de rappel maximale développée par le ressort 80 au cours du mouvement de la soupape avant 30 par rapport corps mâle 8 est strictement inférieure à la force de rappel minimale développée par le ressort 66 au cours du mouvement du poussoir 54 par rapport au corps mâle 8. La force de rappel développée par le ressort 80 est à son maximum en configuration accouplée, lorsque la soupape avant 30 et la soupape principale 32 sont toutes deux en position d'ouverture. Cette force maximale est d'ailleurs atteinte dès que la soupape avant 30 est au contact du poussoir 54. La force de rappel minimale développée par le ressort 66 est atteinte lorsque le poussoir est en position avancée. En particulier, le ressort 66 présente une raideur supérieure à celle du ressort 80, de manière à pouvoir exercer une force de rappel supérieure à celle du ressort 80.

On comprend donc qu'en pratique, l'élément de raccord 2 est agencé de telle sorte que, lors d'un accouplement avec un élément de raccord 4 complémentaire au cours duquel la soupape avant 30 est déplacée vers sa position d'ouverture, la soupape avant 30 vient au contact du poussoir 54 et déplace le poussoir 54. Le poussoir 54 vient ensuite au contact de la soupape de sécurité 34 et la déplace en position d'ouverture du passage secondaire 46 avant de venir au contact de la soupape principale 32 et de la déplacer en position d'ouverture. L'élément de raccord 2 est agencé de telle sorte que, lors d'un accouplement avec un élément de raccord 4 complémentaire, le poussoir 54 ou la soupape de sécurité 34 vient au contact de la soupape principale 32 pour déplacer la soupape principale 32 depuis sa position de fermeture vers sa position d'ouverture.

Le poussoir 54 et la soupape principale 32 sont agencés pour interagir entre eux de sorte que le déplacement du poussoir 54 vers la position avancée entraîne en déplacement la soupape principale 32 vers sa position de fermeture.

Un exemple de procédé d'assemblage de l'élément 2 est maintenant brièvement décrit à titre illustratif et non nécessairement limitatif.

Tout d'abord, l'ensemble formé du poussoir 54 et de la soupape principale 32 est assemblé en enfilant la pièce d'appui 64 par l'arrière du poussoir 54, puis en engageant le corps principal 40 de la soupape principale 32 autour du poussoir 54. Les billes 70 sont ensuite engagées dans la gorge périphérique 72 puis dans les rainures longitudinales 74 de la soupape principale 32. La soupape de sécurité 34 et le ressort 50 agissant sur cette soupape de sécurité 34 sont ensuite engagés dans le corps arrière 44.

Le corps intermédiaire 42 est ensuite vissé en butée sur l'arrière contre le corps arrière 44. Le sous-ensemble formé par le corps arrière 44 et le corps intermédiaire 42 est ensuite vissé en butée sur l'avant contre le corps principal 40, avec interposition d'un joint d'étanchéité 82. La pièce arrière 52 et l'ensemble formé par le poussoir 54 et la soupape principale 32 sont ensuite mis en place à l'intérieur de la partie arrière 14 du corps mâle 8 puis la partie intermédiaire 12 est vissée sur la partie arrière 14.

Ensuite, le ressort 66 est engagé entre la partie intermédiaire 12 et la pièce d'appui avant 64, puis le ressort 80 est mis en place autour du poussoir 54 à l'avant de la pièce d'appui 64. La partie avant 10, après avoir été équipée de la soupape avant 30, est ensuite vissée dans la partie intermédiaire 12. L'élément mâle 2 est alors dans sa configuration assemblée.

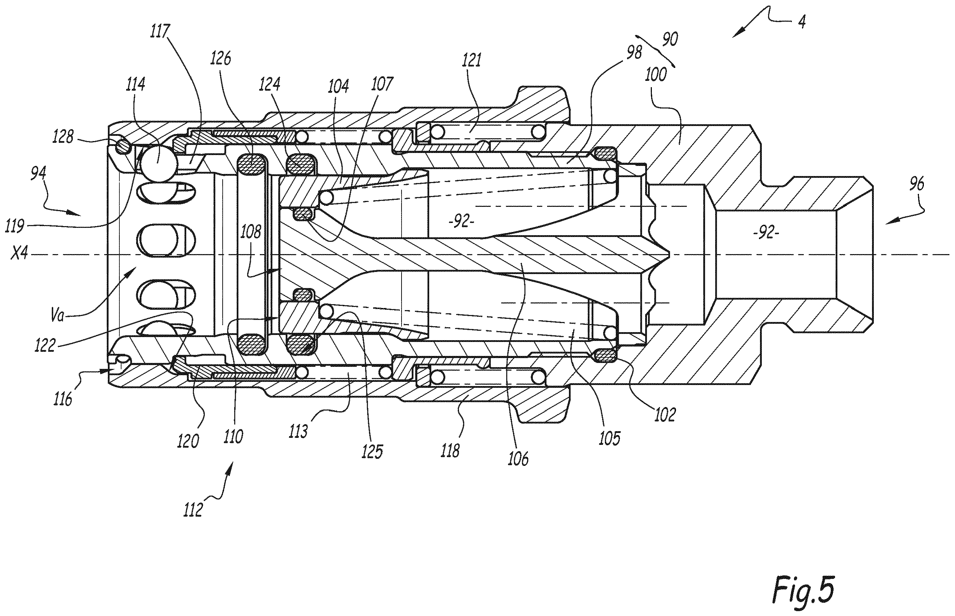

La figure 5 représente un exemple de l'élément de raccord femelle 4.

L'élément femelle 4 comporte un corps femelle 90 délimitant un conduit interne 92 qui s'étend entre un orifice avant 94 et un orifice arrière 96. La référence X4 dénote un axe longitudinal du corps femelle 90. Par exemple, le corps femelle 90 présente une forme essentiellement tubulaire allongée et centrée selon l'axe longitudinal X4. Lorsque l'élément femelle 4 est dans une configuration accouplée avec l'élément mâle 2, l'axe X4 est confondu avec l'axe X2.

L'orifice avant 94 est destiné à être associé avec l'orifice avant 18 de l'élément 2 pour permettre la circulation du fluide depuis l'élément 2 vers l'élément 4.

Le corps femelle 90 comporte ici une partie avant 98 et une partie arrière 100 qui sont vissées l'une avec l'autre de façon étanche grâce à un joint d'étanchéité 102.

L'élément 4 comporte en outre un tiroir 104 et un piston 106. Le tiroir 104 est déplaçable en translation le long de l'axe X4 par rapport au corps femelle 90 entre une position de fermeture et une position d'ouverture du conduit interne 92. Le piston 106 est quant à lui fixe par rapport au corps 90 en étant pris en sandwich entre la partie avant 98 et la partie arrière 100. Un ressort 105 repousse le tiroir 104 vers sa position de fermeture. Par exemple, le ressort 105 est un ressort hélicoïdal à compression coaxial avec l'axe X4, interposé entre l'arrière du tiroir 104 et une base du piston 106.

Dans la position de fermeture, le tiroir 104 coopère de manière étanche avec le corps femelle 90 par l'intermédiaire d'un joint d'étanchéité 124 logé dans une gorge périphérique interne 125 du corps femelle 90 et avec le piston 106 par l'intermédiaire d'un joint d'étanchéité 107 logé dans une gorge périphérique externe du piston 106.

La face avant 108 du piston et la face avant 110 du tiroir 104 sont alignées entre elles lorsque le tiroir 104 est dans la position de fermeture et que l'élément femelle 4 est désaccouplé.

Le corps femelle 90, la face avant 108 du piston 106 et la face avant 110 du tiroir 104 délimitent en configuration désaccouplée un volume d'accueil Va de l'élément mâle 2 dans le corps femelle 90.

Un joint d'étanchéité 126 est logé dans une gorge périphérique interne du corps femelle 90, dans le volume d'accueil Va.

L'élément femelle 4 est en outre équipé d'un dispositif de verrouillage 112 destiné à verrouiller l'élément 4 dans une configuration accouplée avec l'élément 2. Le dispositif de verrouillage 112 est ici apte à coopérer avec la gorge de verrouillage 22 ménagée sur la partie avant 10 de l'élément 2.

Dans cet exemple, le dispositif de verrouillage 112 est un dispositif de verrouillage à bille. En variante, le dispositif de verrouillage 112 peut être réalisé différemment. On comprend donc que, dans un tel cas, l'élément 2 est adapté en conséquence et que la gorge de verrouillage 22 peut être remplacée par un autre dispositif complémentaire du dispositif de verrouillage 112.

Ainsi, dans l'exemple illustré, le dispositif de verrouillage 112 comporte des billes de verrouillage 114, en l'occurrence huit, un logement allongé 117 adapté pour recevoir chacun une des billes de verrouillage 114 dans le corps femelle 90, et comporte également une bague de verrouillage 118 et une bague interne 120 qui coopère avec un ressort interne 113 intercalé entre une bague de butée du corps femelle 90 et la bague interne 120. La bague de verrouillage 118 est adaptée pour recouvrir les billes de verrouillage 114 par une surface radiale interne 119 et les maintenir dans une position interne de verrouillage dans laquelle elles dépassent partiellement dans le volume d'accueil Va. La bague interne 120 est adaptée pour délimiter axialement la position longitudinale des billes de verrouillage 114 dans leur logement allongé 117. La bague interne 120 est mobile en translation par rapport au corps femelle 90. La bague interne 120 et la bague de verrouillage 118 sont montées coaxialement autour de l'axe longitudinal X4. La référence 122 désigne un logement interne de la bague de verrouillage 118 en arrière et en creux de la surface radiale interne 119, la référence 116 désigne un logement interne de la bague de verrouillage 118 en avant et en creux de la surface radiale interne 119 et la référence 128 désigne un segment d'arrêt associé à la bague de verrouillage 118.

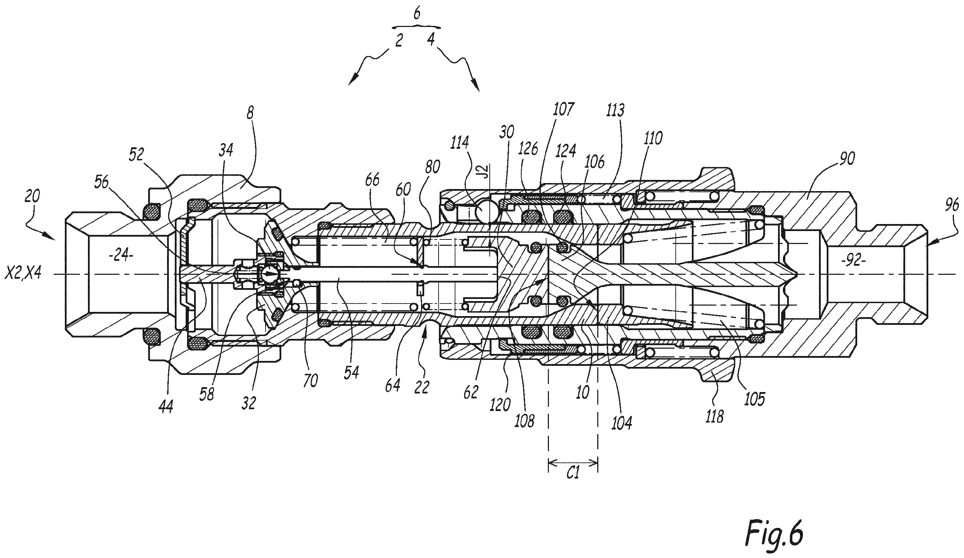

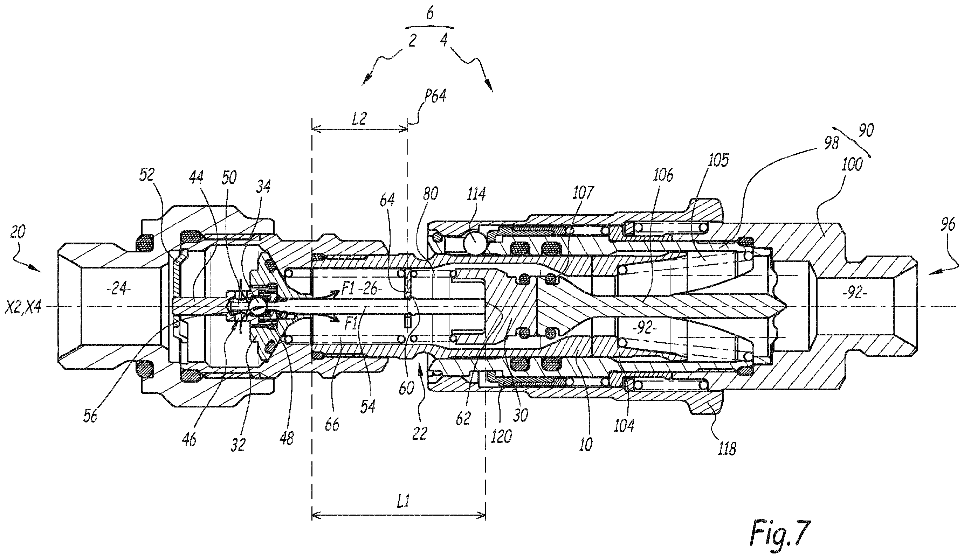

Les figures 6 à 8 représentent le raccord 6 formé par l'assemblage des éléments de raccord mâle 2 et femelle 4. Un exemple d'une séquence d'accouplement pour accoupler les éléments mâle et femelle 2 et 4 est maintenant décrit. Les éléments 2 et 4 sont illustrés en cours d'accouplement sur les figures 6 et 7, tandis qu'ils sont accouplés sur la figure 8.

D'abord, les éléments 2 et 4 sont alignés sorte que leurs axes respectifs X2 et X4 coïncident et que leurs orifices avant respectifs 18 et 94 soient tournées en face l'une de l'autre. Puis les éléments 2 et 4 sont emmanchés l'un dans l'autre. L'élément 2 est introduit dans le volume d'accueil Va.

La face avant de la soupape avant 30 entre en contact avec la face avant 108 du piston 106. Simultanément, la face avant de la partie avant 10 entre en contact avec la face avant 110 du tiroir 104, puisque, dans la position de fermeture du tiroir, la face avant 110 est alignée avec la face avant 108 du piston fixe 106.

Le corps femelle 90 entoure au moins en partie le corps mâle 8, ici au niveau de la partie avant 10 du corps mâle 8. Par exemple, la face avant du corps mâle 8 parvient au contact des billes de verrouillage 114 et les repousse vers l'arrière dans le logement allongé 117, provoquant un déplacement en recul de la bague interne 120, puis radialement dans le logement interne arrière 122. La bague interne 120 est repoussée vers sa position rétractée, tandis que la bague de verrouillage 118 reste en position avancée, car elle est repoussée par un ressort 121 monté sous la bague de verrouillage 118 jusqu'à arriver en butée contre le segment d'arrêt 124.

Le corps mâle 8 poursuit son mouvement jusqu'à ce que l'étanchéité soit assurée par les joints d'étanchéité 124 et 126 qui viennent prendre contact et entourer la partie avant 10. Sous l'action de la partie avant 10, le tiroir 104 est repoussé en arrière vers sa position d'ouverture, de telle sorte que les faces avant 108 et 110 ne sont plus alignées, comme illustré sur la figure 6. Ainsi, le joint 107 porté par le piston 106 n'est plus en contact avec le tiroir 104, de sorte que le conduit interne 92 est mis en communication avec la chambre intermédiaire 26. A ce stade, cependant, le fluide ne quitte pas la chambre arrière 24 puisque les soupapes 32 et 34 sont fermées.

La référence « C1 » correspond à la course d'ouverture de la communication mâle/femelle, c'est-à-dire la valeur minimale du déplacement le long de l'axe X2 de la soupape avant 30 depuis sa position de fermeture, lorsqu'elle est déplacée comme décrit ci-dessus à l'accouplement, pour permettre au joint 107 du piston 106 de quitter le contact étanche avec le corps mâle 8 et mettre en communication la chambre intermédiaire 26 avec le conduit interne 92.

Comme on le verra ci-après, la course de la soupape avant 30 pour ouvrir la soupape de sécurité 34 depuis la configuration désaccouplée est supérieure à la course d'ouverture C1 de la communication mâle/femelle.

En parallèle de ce mouvement, la soupape avant 30 est repoussée vers l'arrière de l'élément mâle 2 jusqu'à venir en contact direct avec la face avant 62 du poussoir 54. La soupape avant 30 est repoussée vers sa position d'ouverture en s'opposant à l'effort de rappel exercé par le ressort 80.

Néanmoins, durant ce recul de la soupape avant 30, le poussoir 54 reste dans sa position avancée en butée avant contre la soupape principale 32, du fait que la force exercée par le ressort 66 est supérieure à la force exercée par le ressort 80.

Au fur et à mesure que le déplacement se poursuit, la soupape avant 30 en butée sur la face avant 62 du poussoir 54, entraîne un recul du poussoir 54 en direction de sa position reculée. Ce faisant, le poussoir 54 surmonte l'effort de rappel exercé par le ressort 66. Le ressort 80 reste comprimé, mais n'est pas davantage comprimé lors du mouvement de recul du poussoir 54, puisque la pièce d'appui 64 accompagne le mouvement de recul du poussoir 54. En effet, l'épaulement intermédiaire 60 appuie sur la pièce 64, ce qui entraîne la pièce d'appui 64 en translation le long de l'axe X2.

Dans cette configuration, le poussoir 54 n'a à ce stade pas encore pris contact avec la soupape de sécurité 34, de telle sorte que la soupape de sécurité 34 et la soupape principale 32 sont toutes les deux dans leur position de fermeture. Ainsi, le fluide contenu dans la chambre arrière 24 ne peut pas, à ce stade, pénétrer dans la chambre intermédiaire 26.

Le poussoir 54 parvient ensuite au contact de la soupape de sécurité 34. Précisément, la face arrière 56 du poussoir 54 prend appui sur la soupape de sécurité 34, c'est-à-dire ici appuie sur la bille formant la soupape de sécurité 34. La soupape de sécurité 34 recule avec le poussoir 54 sous l'effet de cet appui en s'opposant à l'effort de rappel exercé par le ressort 50.

Comme illustré sur la figure 7, la soupape de sécurité 34 quitte son siège et ouvre le passage secondaire 46, de dimension réduite, entre la chambre intermédiaire 26 et la chambre arrière 24. Un faible débit de fluide peut s'écouler depuis la chambre arrière 24 vers la chambre intermédiaire 26 par l'intermédiaire du passage secondaire 46, comme illustré par les flèches F1. A ce stade, les éléments 2 et 4 sont encore en cours d'accouplement. Comme la communication de fluide est ouverte entre le conduit interne 92 et la chambre 26, ce fluide peut s'écouler vers le conduit interne 92, ce qui permet de diminuer la pression du fluide dans la chambre arrière 24.

Le mouvement d'emmanchement se poursuit et l'épaulement arrière 58 du poussoir 54 arrive en butée contre la face avant 76 du corps intermédiaire 42. Sous l'effet de cet appui et du mouvement d'emmanchement, la soupape principale 32 est repoussée vers sa position d'ouverture. En d'autres termes, le déplacement du poussoir 54 vers la position reculée entraîne en déplacement la soupape principale 32 vers sa position d'ouverture. Dans cet exemple, le poussoir 54 appuie directement sur la soupape principale 32 et le ressort 50 n'est pas davantage comprimé.

Comme illustré sur la figure 8, une fois la soupape principale 32 dans sa position d'ouverture, avec le poussoir en position reculée, un passage principal 37 de fluide est ménagé entre la soupape principale 32 et le corps mâle 8 permettant à un flux F2 de fluide, plus important que le flux F1, de circuler entre la chambre arrière 24 et la chambre intermédiaire 26. Ainsi, le fluide circule vers le conduit interne 92 de l'élément femelle 4.

A ce stade, le dispositif de verrouillage 112 s'enclenche pour verrouiller les éléments 2 et 4 dans l'état accouplé. Le mouvement d'emmanchement ne peut plus être poursuivi. De plus, les éléments 2 et 4 ne peuvent pas être désaccouplés l'un de l'autre sans au préalable libérer le dispositif de verrouillage 112.

Dans l'exemple illustré, le mouvement d'emmanchement prend fin lorsque les billes de verrouillage 114 parviennent en regard de la gorge de verrouillage 22 du corps mâle 8 et s'y engagent en position interne de verrouillage. La bague interne 120 de l'élément femelle 4 est repoussée en position avancée par le ressort 113, de sorte que les billes de verrouillage 114 sont repoussées vers l'avant dans le logement allongé 117 dans une position où elles sont radialement recouvertes par la surface radiale interne 119 de la bague de verrouillage 118.

L'accouplement est automatique car seul le mouvement de rapprochement des corps mâle 8 et femelle 90 permet au dispositif de verrouillage 112 d'atteindre sa configuration verrouillée avec les billes de verrouillage 114 maintenues en prise dans la gorge de verrouillage 22.

La soupape principale 32 est ouverte et les éléments 2, 4 sont accouplés. Ainsi, de préférence, la somme de la course de déplacement de la soupape avant depuis sa position de fermeture par rapport au poussoir en position avancée (distance D3) et de la course du poussoir depuis sa position avancée par rapport à la soupape de sécurité (distance D2) en position de fermeture est supérieure à la course d'ouverture C1.

Une fois dans la configuration accouplée, la soupape avant 30 retrouve ici un guidage radial avec le corps 8, en venant coopérer à jeu radial réduit avec les parois intérieures du conduit interne 16, guidage qu'elle avait perdu après avoir quitté sa position de fermeture, en raison d'un élargissement local du conduit interne 16 au niveau de la partie avant 10. En d'autres termes, le jeu radial J1, J1' entre le corps 8 et la soupape avant 30 dans sa position de fermeture, respectivement dans sa position d'ouverture, est inférieur au jeu radial J2 entre la soupape avant 30 et le corps 8 dans la configuration de la figure 7, dans laquelle la soupape avant 30 est dans une position longitudinale intermédiaire entre sa position de fermeture et sa position d'ouverture.

A ce stade, les billes de verrouillage 114 sont maintenues en position interne de verrouillage par la bague de verrouillage 118 et s'opposent au mouvement de retrait du corps mâle 8 hors du corps femelle 90, donc à la désolidarisation des corps mâle 8 et femelle 90.

Dans son déplacement entre sa position avancée et sa position reculée, le poussoir 54 est au contact de la soupape avant 30 uniquement selon l'axe longitudinal X2. La soupape avant 30 n'a pas de contact radial avec le poussoir 54. En d'autres termes, la soupape avant 30 ne guide pas radialement et ne contraint pas radialement le poussoir 54.

Un exemple d'un procédé pour désaccoupler les éléments 2 et 4 est maintenant décrit.

D'abord, la bague de verrouillage 118 est manuellement rétractée vers l'arrière de l'élément femelle 4 pour permettre au logement interne 116 de la bague de verrouillage 118 d'être radialement en face des billes de verrouillage 114, ce qui permet aux billes de verrouillage 114 de s'écarter radialement et de ne plus dépasser dans le volume d'accueil Va et ce qui permet d'écarter le corps femelle 90 du corps mâle 8.

Lorsque le corps femelle 90 commence à être écarté du corps mâle 8, le tiroir 104 retourne graduellement vers sa position de fermeture, sous l'effet du ressort 105, tandis que la soupape avant 30 est repoussée vers sa position de fermeture par le ressort 66.

En parallèle, le ressort 50 repousse la soupape de sécurité 34 vers sa position de fermeture, ce qui referme le passage secondaire 46 et interrompt la circulation du flux F1 de fluide au travers du passage secondaire 46. Le ressort 66 assure que le poussoir 54 revient en butée sur l'avant contre la soupape principale 32, ce qui entraîne la soupape principale 32 vers sa position de fermeture. En d'autres termes, le déplacement du poussoir 54 vers sa position avancée entraîne en déplacement la soupape principale 32 vers sa position de fermeture. Ce déplacement est ici assuré par une action directe du poussoir 54 sur la soupape principale 32 grâce aux billes 70 de butée et par le ressort 66. Une fois arrivé en butée contre la soupape 32, le poussoir 54 ne se déplace plus par rapport au corps 40 de la soupape 32, mais l'ensemble formé de la soupape principale 32 et du poussoir 54 continue à se déplacer en translation vers l'avant dans le conduit interne 16 sous l'action du ressort 66.

A ce stade, la chambre intermédiaire 26 est toujours en communication avec le conduit interne 92. En effet, comme la force de rappel exercée par le ressort 80 est plus faible que celle exercée par le ressort 66, la soupape avant 30 reste au contact du poussoir 54 pendant que le ressort 66 repousse la pièce d'appui 64 vers l'avant.

Une fois que la soupape principale 32 arrive dans sa position de fermeture en butée sur le corps 8, le poussoir 54 ne peut plus se déplacer plus en avant, puisqu'il est déjà en butée avant sur la soupape principale 32. Le ressort 66 ne peut plus continuer à se détendre, puisque l'épaulement intermédiaire 60 empêche la pièce d'appui 64 d'aller plus loin.

Alors, le ressort 80 se détend à son tour et repousse la soupape avant 30 vers sa position de fermeture, puisqu'il n'est pas assez fort par rapport au ressort 66 pour repousser la pièce d'appui 64 en arrière.

La soupape avant 30 quitte la face avant 62 du poussoir 54. La soupape avant 30 reste en contact avec la face avant du piston 106 et, au fur et à mesure que l'élément femelle 4 est retiré hors de l'élément mâle 2, le tiroir 104 revient vers sa position de fermeture. La soupape avant 30 reprend finalement l'étanchéité avec le corps mâle 8 et le tiroir 104 reprend l'étanchéité avec le corps femelle 90 et avec le piston 106.

La chambre intermédiaire 26 est fermée, de même que le conduit interne 92. Les éléments de raccord 2 et 4 peuvent être complètement séparés et sont prêts pour une autre connexion.

Dans cet exemple, lors du désaccouplement, entre la configuration désaccouplée et la configuration dans laquelle le poussoir 54 vient en butée vers l'avant contre la soupape principale 32, la soupape principale 32 est flottante, c'est-à-dire qu'elle n'est soumise à aucun effort élastique par rapport au corps mâle 8. Cela assure, lors du désaccouplement, que la soupape de sécurité 34 sera fermée avant la fermeture de la soupape principale 32.

Grâce à l'invention, le comportement de la soupape de sécurité 34 et de la soupape principale 32 suit une séquence prédéfinie lors de l'accouplement et lors du désaccouplement. En particulier, lors de l'accouplement, la soupape principale 32 ne s'ouvre qu'après la soupape de sécurité 34 qui elle-même ne s'ouvre qu'après que les éléments 2 et 4 aient été emmanchés et que la communication de fluide entre éléments 2 et 4 soit assurée. D'une part, cela permet d'abaisser la pression dans la chambre arrière 24 avant l'ouverture de la soupape principale 32. De façon analogue, lors du désaccouplement, la soupape de sécurité 34 et la soupape principale 32 sont fermées avant de refermer la communication de fluide entre les éléments de raccord 2 et 4.

Grâce au fait que les ressorts 66 et 80 sont en appui sur la même pièce 64, il n'est pas nécessaire de comprimer davantage le ressort 80 pour ouvrir la soupape de sécurité 34 et la soupape principale 32. La force de rappel du ressort 80 plus faible que la force de rappel du ressort 66 garantit la séquence de désaccouplement inverse à la séquence d'accouplement, soit la fermeture de la soupape principale 32 et de la soupape de sécurité 34 avant la fermeture de la communication fluidique entre chambre intermédiaire 26 et conduit interne 92 et la fermeture de la soupape avant 30. Cela évite les fuites de fluide sous pression dans la chambre intermédiaire 26 au moment du désaccouplement, ce qui permet de conserver une chambre intermédiaire 26 ayant une pression moins élevée afin de pouvoir facilement en repousser la soupape avant 30 lors d'une connexion ultérieure.

Comme, en cours d'accouplement, la soupape avant 30 n'est plus guidée radialement par le corps mâle 8 dans une position intermédiaire, notamment lorsque la soupape avant 30 parvient au contact du poussoir 54 et tant que la soupape principale 32 n'est pas déplacée vers sa position d'ouverture, et comme la soupape avant 30 ne guide pas radialement, le poussoir 54, les risques de coincement entre les pièces en mouvement sont évités.

D'autres modes de réalisation sont possibles. En particulier, en variante, des composants décrits en référence à l'élément de raccord mâle peuvent, en variante, être montés sur un élément de raccord femelle et vice versa.

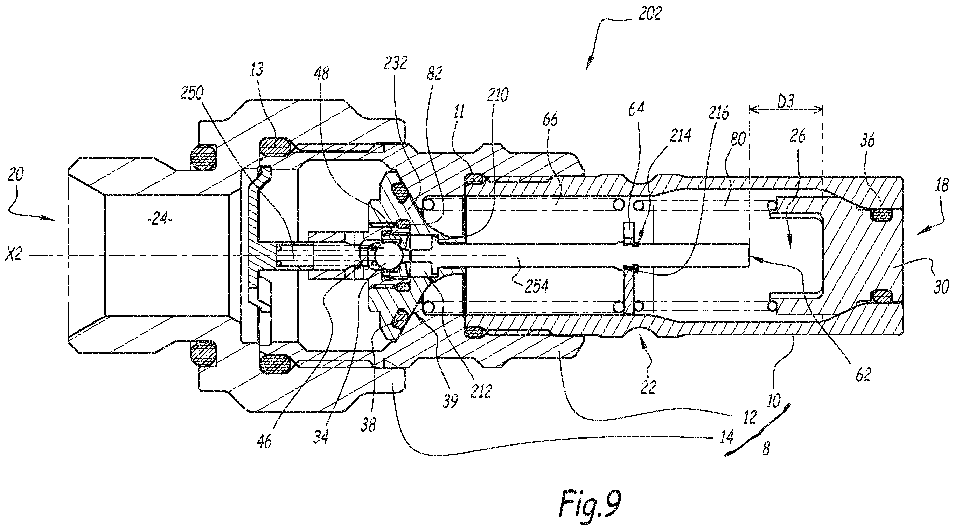

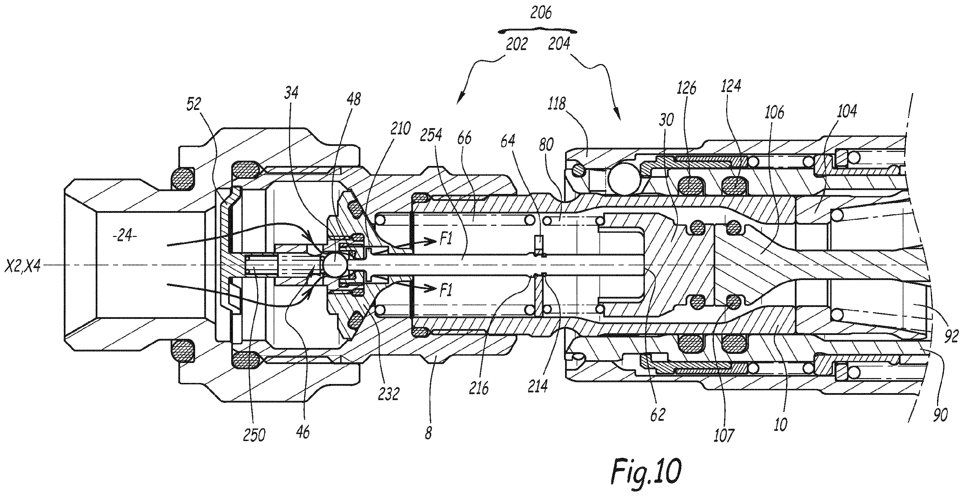

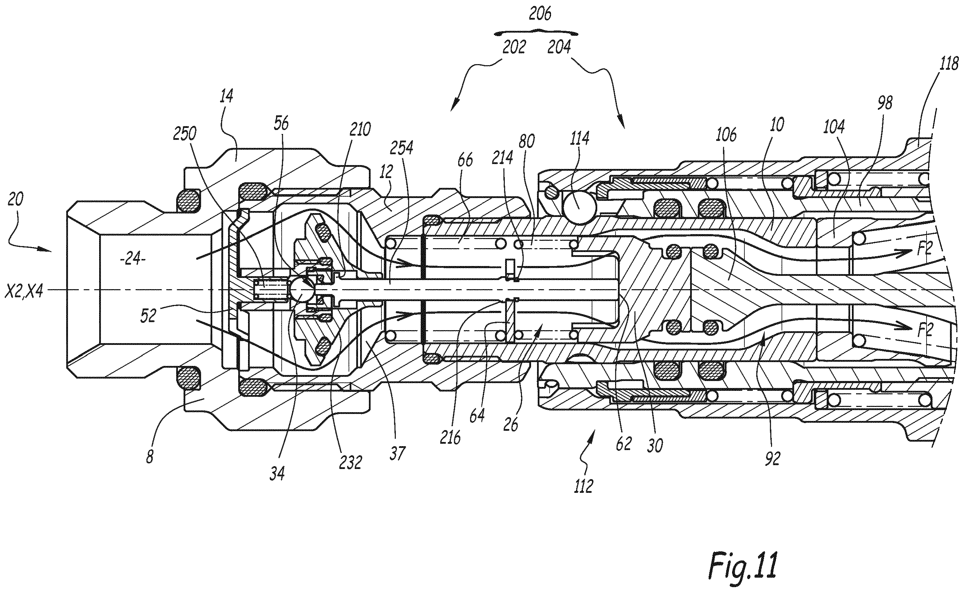

Les figures 9 à 11 représentent un deuxième mode de réalisation de l'invention dans lequel un élément de raccord mâle 202 est adapté pour être accouplé par emmanchement dans un élément de raccord femelle 204 pour former un raccord 206 autorisant la circulation d'un fluide.

Les éléments de raccord 202 et 204 sont ici destinés à jouer un rôle similaire à celui des éléments de raccord 2 et 4. Les constituants de ces éléments de raccord 202 et 204 qui sont analogues à ceux des éléments de raccord selon le premier mode de réalisation précédemment décrit portent les mêmes références et ne sont pas décrits plus en détail, dans la mesure où la description ci-dessus peut leur être transposée. Seuls les constituants présentant des différences notables sont décrits dans ce qui suit.

L'élément de raccord 202 diffère notamment de l'élément de raccord 2, en ce que la butée du poussoir 254 sur la soupape principale 232 est assurée par une collerette 210 du poussoir 254 en appui sur le fond plan d'un lamage 212 ménagé dans la soupape principale 232. En d'autres termes, les billes 70 de butée sont omises, de même que la gorge périphérique 72 et les rainures longitudinales 74.

La soupape principale 232 a ici la même fonction que la soupape principale 32, mais présente une forme différente. En particulier, la soupape de sécurité 34 est repoussée par un ressort 250 similaire au ressort 50 mais qui est ici interposé entre la soupape de sécurité 34 et la pièce arrière 52 solidaire du corps mâle 8. Ainsi, le ressort 250 n'est pas en appui sur la soupape principale 232.

La pièce arrière 52 coopère radialement avec la soupape principale 232 pour son guidage en étant engagée dans la soupape principale 232 tout au long du déplacement de la soupape principale 232 entre sa position de fermeture et sa position d'ouverture.

La pièce d'appui 64 est maintenue solidaire en translation avec le poussoir 254 en étant placée entre un segment d'arrêt 214 et une surface d'épaulement 216 solidaires du poussoir 254. Par exemple, le segment d'arrêt 214 est placé à l'avant de la pièce d'appui 64 tandis que la surface d'épaulement 216 est placée à l'arrière de la pièce d'appui 64 et est tournée vers l'orifice avant 18. Lors de l'assemblage, la pièce d'appui 64 est montée par l'avant du poussoir 254. Le ressort 80 est ici en appui entre la pièce d'appui 64 et la soupape avant 30. Le ressort 66 qui est en appui entre la pièce d'appui 64 et le corps 8. Selon une variante non illustrée, la pièce d'appui 64 peut être monobloc avec le poussoir 54.

L'élément de raccord 204 est quant à lui similaire à l'élément de raccord 4.

La séquence d'accouplement des éléments 202 et 204 est similaire à celle précédemment décrite pour les éléments 2 et 4, si ce n'est que le poussoir 254 actionne ici indirectement la soupape principale 232 à l'ouverture par l'intermédiaire de la soupape de sécurité 34. En effet, lors de l'accouplement, la soupape avant 30 repousse le poussoir 254 dont la face arrière 56 vient repousser la soupape de sécurité 34 et ouvrir le passage secondaire 46 entre la chambre arrière 24 et la chambre intermédiaire 26. Cela provoque l'abaissement de la pression de fluide dans la chambre 24.

Puis la poursuite du recul du poussoir 254 dans le corps mâle 8 amène la soupape de sécurité 34 en butée arrière contre la soupape principale 232 et la soupape de sécurité 34, repoussée par le poussoir 254, déplace la soupape principale 232 vers sa position d'ouverture dans laquelle un flux F2 de fluide est possible entre la chambre arrière 24 et la chambre intermédiaire 26 dans le passage principal 37 ménagé entre le corps mâle 8 et la soupape principale 232. En d'autres termes, c'est la soupape de sécurité 34 qui ouvre la soupape principale 232. On comprend donc que le poussoir 254 ne vient pas au contact de la soupape principale 232 par l'intermédiaire d'un épaulement tel que l'épaulement arrière 58. Lorsque la soupape de sécurité 34 est en butée arrière contre la soupape principale 232, une communication de fluide reste possible entre la chambre arrière 24 et la chambre intermédiaire 16 au niveau du passage secondaire 46 grâce à une rainure longitudinale pratiquée sur le corps intermédiaire 42 au niveau du passage secondaire 46.Lors du désaccouplement, le poussoir 254, sous l'effort de rappel élastique du ressort 66, suit le mouvement de retrait de la soupape avant 30 vers sa position de fermeture, pendant lequel le contact reste maintenu entre la soupape avant 30 et la face avant 62 du poussoir 254. Le ressort 250 repousse la soupape de sécurité 34 sur son siège, tandis que la soupape principale 32 reste ouverte. Puis, le poussoir 254, toujours élastiquement repoussé vers l'avant par le ressort 66, parvient en butée contre la soupape principale 232 grâce à la collerette 210 et la ramène en position de fermeture.

Pour les premier et deuxième modes de réalisation, on a prévu un verrouillage automatique à billes assuré grâce au dispositif de verrouillage 112. Il serait également possible de prévoir à la place un verrouillage de type baïonnette, un verrouillage avec des aiguilles ou des doigts de verrouillage, automatique ou non.

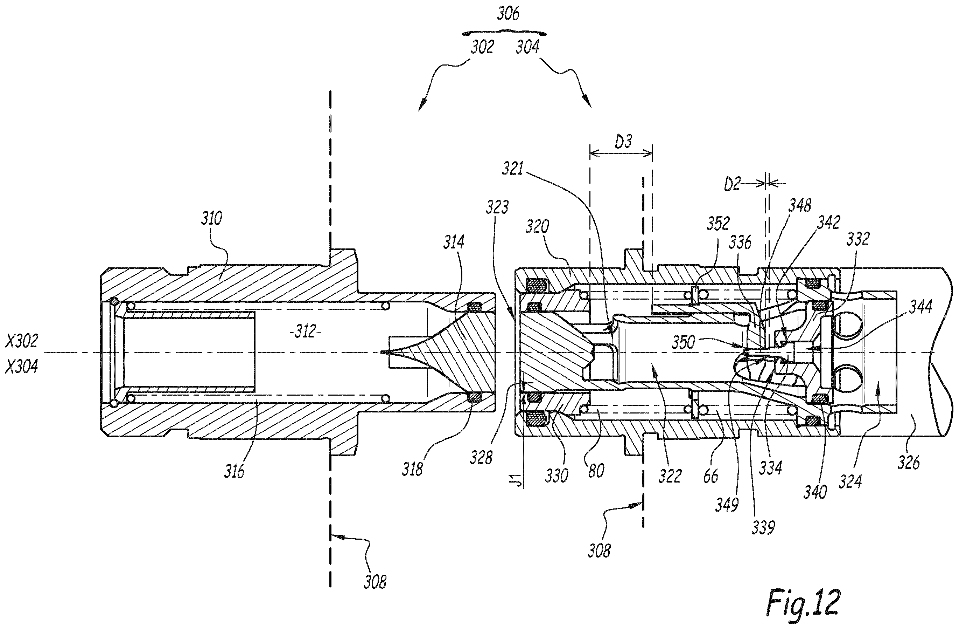

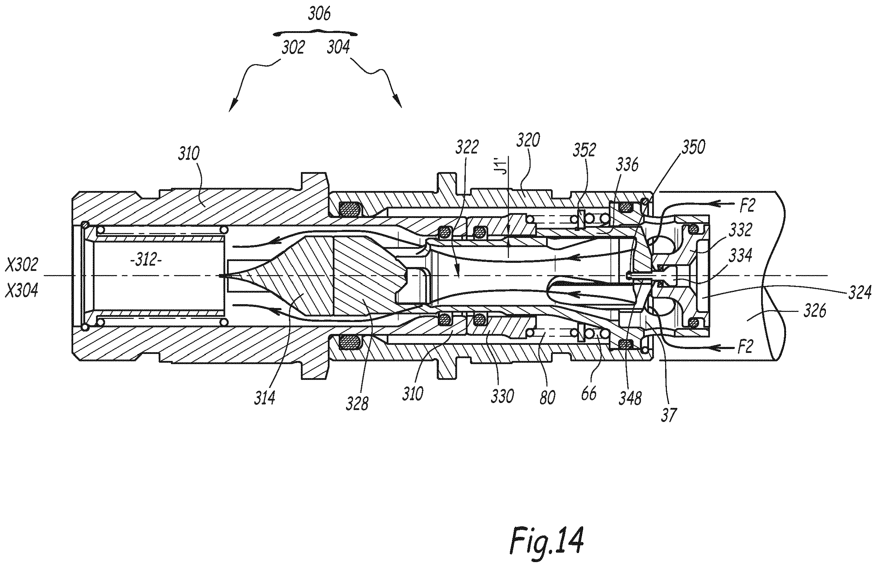

Les figures 12 à 14 représentent un troisième mode de réalisation de l'invention, dans lequel un élément de raccord mâle 302 est adapté pour être accouplé par emmanchement dans un élément de raccord femelle 304 pour former un raccord 306 autorisant la circulation d'un fluide. Les éléments de raccord 302 et 304 selon ce troisième mode de réalisation sont destinés à jouer un même rôle que les éléments de raccord précédemment décrits.

Les constituants de ces éléments de raccord 302 et 304 qui sont analogues à ceux des premier et/ou deuxième modes de réalisation ne sont pas décrits plus en détail, dans la mesure où les descriptions qui en sont faites ci-dessus peuvent leur être transposées.

Dans ce troisième mode de réalisation, les éléments de raccord 302 et 304 sont montés sur des plaques 308 destinées à être rapprochées l'une de l'autre pour favoriser l'emmanchement des éléments 302 et 304 puis à être maintenues rapprochées l'une de l'autre lorsque les éléments 302 et 304 sont accouplés. Les plaques 308 s'étendent perpendiculairement aux axes longitudinaux X302 et X304 respectifs des éléments 302 et 304.

Une différence notable par rapport aux premier et deuxième modes de réalisation est que les soupapes avant, de sécurité et principale précédemment décrites appartiennent ici à l'élément femelle 304.

L'élément mâle 302 comporte un corps mâle 310 qui définit un conduit interne 312 et une soupape mâle 314 mobile en translation dans le conduit interne 312, le long de l'axe longitudinal X302, entre une position de fermeture et une position d'ouverture d'un orifice avant de l'élément 302. Un ressort 316 repousse la soupape mâle 314 vers sa position de fermeture. La plaque 308 de l'élément 302 est solidaire du corps mâle 310. La soupape mâle 314 comporte ici un joint d'étanchéité 318 similaire au joint d'étanchéité 36.

L'élément femelle 304 comporte un corps femelle 320 qui délimite un conduit interne 321 analogue au conduit interne 16 et qui comporte un orifice avant 323, une chambre intermédiaire 322 et une chambre arrière 324 qui jouent le même rôle que les chambres 26 et 24, respectivement.

La chambre arrière 324 est apte à contenir un fluide sous pression et débouche sur un orifice arrière de l'élément 304 qui se prolonge par un conduit 326 par exemple raccordé à une conduite ou à un réservoir de fluide sous pression, non illustré. Dans l'exemple illustratif du raccord 306, le fluide sous pression est prévu pour s'écouler de l'élément 304 vers l'élément 302.

Le corps femelle 320 comprend un piston 328 solidaire radialement et longitudinalement du corps femelle. Le piston 328 présente la forme d'une pièce de révolution autour de l'axe longitudinal X304 dans laquelle sont ménagés des passages pour le fluide.

L'élément femelle 304 comporte un tiroir 330 mobile en translation selon l'axe longitudinal X304, qui joue le rôle de soupape avant analogue à la soupape avant 30. La soupape avant 330 est intercalée radialement entre le piston 328 et le corps femelle 320 et mobile entre une position de fermeture dans laquelle la soupape avant 330 coopère de manière étanche avec le corps femelle 320 et le piston 328 et dans laquelle le soupape avant 330 est guidé radialement par le corps femelle 320, et une position rétractée d'ouverture du conduit interne 321 au niveau de l'orifice avant 323.

L'élément 304 comporte également une soupape principale 332, une soupape de sécurité 334 et un poussoir 336, qui ont un rôle analogue aux soupapes 32 et 34 et au poussoir 54, respectivement.

Le poussoir 336 présente une forme en cloche et est monté en partie autour du piston 328 et en partie à l'intérieur du piston 328. La soupape principale 332 en positon de fermeture vient en butée avant contre le piston 328 lorsque l'élément de raccord 304 est désaccouplé. L'étanchéité entre soupape principale 332 et piston 328 est réalisée par un joint d'étanchéité radial 340 disposé entre la soupape principale 332 et le piston 328.

La soupape de sécurité 334 présente la forme d'une pièce de révolution et coopère en position de fermeture avec un siège 342 de la soupape principale et ferme un passage secondaire 344 entre la chambre arrière 324 et la chambre intermédiaire 322 à travers la soupape principale 332. Une tige avant 348 de la soupape de sécurité 334, dépassant en avant du siège 342 et en avant de la soupape principale 332, est engagée à jeu radial réduit dans le poussoir 336. Contrairement aux premier et deuxième modes, le poussoir 336 n'est pas engagé dans la soupape principale 332. Un segment d'arrêt 350 solidaire de la tige avant 348 limite le déplacement du poussoir 336 vers l'avant par rapport à la soupape de sécurité 334. Un épaulement 349 tourné vers l'avant est ménagé sur la tige avant 348.

Une pièce d'appui 352, jouant le même rôle que la pièce d'appui 64, est disposée dans la chambre 322 en étant montée coaxialement autour du piston 328 et du poussoir 336. La pièce d'appui 352 est maintenue solidaire longitudinalement du poussoir 336 entre un segment d'arrêt et un épaulement du poussoir 336. Les ressorts 80 et 66 sont disposés radialement à l'extérieur du piston 328. Le ressort 80 est interposé entre la pièce d'appui 352 et le piston 328. Le ressort 66 est interposé entre la pièce 352 et une base de la soupape avant330. Les spires des ressorts 80 et 66 sont alignées le long de l'axe X304. Lorsque l'élément de raccord 304 est en configuration désaccouplée, le ressort 66 rappelle le poussoir 336 vers l'avant, par l'intermédiaire de la pièce d'appui 352. Il est à noter que la pièce d'appui 352 n'assure ici pas de guidage radial du poussoir 336. Ce guidage est assuré par la surface externe du piston 328. Dans sa position avancée, le poussoir 336 vient en butée avant contre la soupape de sécurité 334, la soupape de sécurité étant en butée avant contre son siège 342 sur la soupape principale 332 et la soupape principale 332 étant en butée avant contre le piston 328.

Lorsque le poussoir 336 est en positon avancée et que la soupape de sécurité 334 est en position de fermeture, la distance D2 est définie entre une face arrière du poussoir 336 et l'épaulement 349 destinés à venir en contact l'un avec l'autre pour le déplacement de la soupape de sécurité 334 vers sa position d'ouverture.

Lors de l'accouplement, la soupape mâle 314 vient en contact contre la tête du piston 328 et recule par rapport au corps mâle 310. Simultanément, le corps mâle 310 repousse la soupape avant 330 vers sa position d'ouverture à l'encontre du ressort 80, le ressort 66 développant une force de rappel bien supérieure à la force de rappel du ressort 80. La soupape avant 330, en reculant, prend appui sur la face avant du poussoir 336, après une course de la valeur de la distance D3 définie comme précédemment, et le repousse en arrière. Le poussoir 336 recule jusqu'à prendre appui sur l'épaulement 349 de la tige 348 pour repousser la soupape de sécurité 334 et ainsi ouvrir le passage secondaire 344 entre la chambre arrière 324 et la chambre intermédiaire 322. L'ouverture du passage secondaire 344 est réalisée après que la communication fluidique entre le conduit interne 312 et la chambre intermédiaire 322 soit effective car la course C1 définie comme précédemment est inférieure à la somme de la distance D2 et de la distance D3. Le flux F1 de fluide s'écoule alors vers la chambre intermédiaire 322 puis vers le conduit interne 312, ce qui abaisse la pression dans la chambre arrière 324. Dans cette configuration, la soupape avant 330 n'est plus guidée radialement par le corps femelle 320.

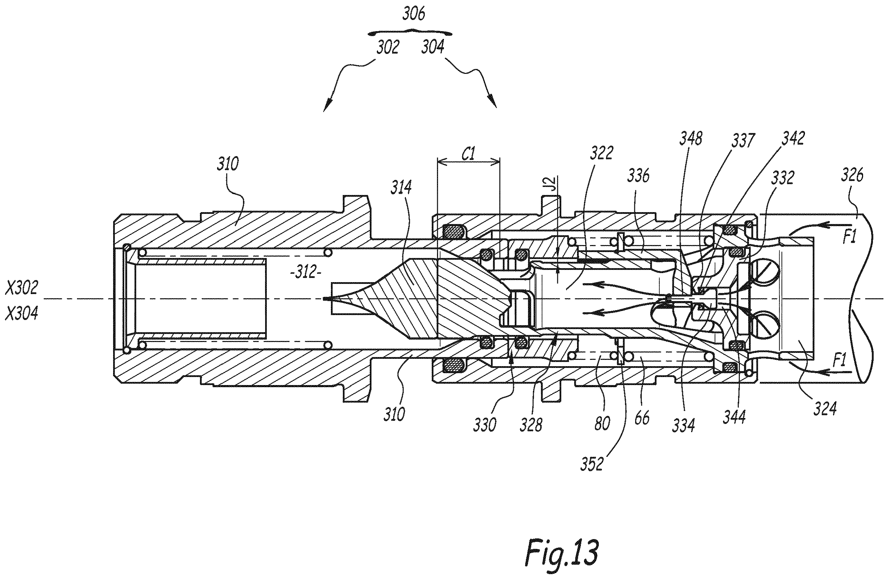

Le mouvement d'emmanchement des éléments 302 et 304 se poursuit, de sorte que le poussoir 336 continue à reculer jusqu'à ce que la face arrière 337 du poussoir 336 vienne au contact d'une face avant 339 de la soupape principale 332 qu'il repousse dans sa position d'ouverture. Le flux F2 de fluide supérieur au flux F1 s'écoule alors au niveau du passage principal 37 autour de la soupape principale 332, entre le corps femelle 320 et la soupape principale 332, depuis la chambre arrière 324 vers la chambre intermédiaire 322. Dans cette configuration, la soupape avant 330 est guidée radialement par la surface radiale externe du piston 328. En d'autres termes, la soupape avant 330 est ici guidée radialement par un élément solidaire du corps 320. Le jeu radial J1, J1' entre le piston 328, solidaire du corps 320, et la soupape avant 330 dans sa position de fermeture, respectivement dans sa position d'ouverture, est inférieur au jeu radial J2 entre le piston 328 et la soupape avant 330 dans la configuration de la figure 13, dans laquelle la soupape avant 330 est dans une position longitudinale intermédiaire entre sa position de fermeture et sa position d'ouverture, en raison d'un rétrécissement local du diamètre extérieur du piston 328.

Lors du désaccouplement, alors que les éléments 302 et 304 commencent à être éloignés l'un de l'autre, le poussoir 336 suit le mouvement de retrait de la soupape avant 330, en maintenant un contact entre le poussoir 336 et la soupape avant 330, puisque la force de rappel du ressort 66 est supérieure à la force de rappel du ressort 80. Le poussoir 336 vient en butée contre le segment d'arrêt 350 et entraîne la soupape de sécurité 334 vers sa position de fermeture en butée contre son siège 342. Le passage secondaire 344 est ainsi refermé et le flux F1 est interrompu. Le ressort 66 exerce alors sa force de rappel également sur la soupape principale 332 qui se referme à son tour. La chambre intermédiaire 322 est isolée de la chambre arrière 324 et le flux F2 est interrompu à son tour. A ce stade, la communication fluidique entre le conduit interne 312 et la chambre intermédiaire 322 est toujours effective. Ensuite, le ressort 80 repousse la soupape avant 330 dans sa position de fermeture.

Pour assurer la fermeture de la soupape de sécurité 334 avant la fermeture de la soupape principale 332, on peut prévoir un ressort additionnel qui prend appui sur la soupape de sécurité 334 et sur la soupape principale 332 ou le corps femelle 320 et qui repousse la soupape de sécurité 334 en position de fermeture.

Les modes de réalisation et les variantes envisagés ci-dessus peuvent être combinés entre eux pour générer de nouveaux modes de réalisation. En particulier, on peut prévoir une soupape de sécurité et un poussoir à la fois dans l'élément mâle et dans l'élément femelle destinés à être accouplés pour former le raccord, lorsque l'un ou l'autre des conduits internes peut être soumis à une pression élevée de fluide.

La bille formant la soupape de sécurité 34 peut être remplacée dans les premier et deuxième modes de réalisation par une soupape de sécurité de forme cylindrique.

## Revendications

1. Elément de raccord (2 ; 202 ; 304) fluidique, comportant :
- un corps (8 ; 320) qui délimite un conduit interne (16 ; 321) s'étendant le long d'un axe longitudinal (X2 ; X304), le conduit interne comprenant une chambre arrière (24 ; 324) et une chambre intermédiaire (26 ; 326), laquelle débouche sur un orifice avant (18 ; 323) du conduit interne ;
- une soupape principale (32 ; 232 ; 332) mobile en translation dans la chambre arrière (24 ; 324) entre une position de fermeture, dans laquelle la soupape principale (32 ; 232 ; 332) est en butée avant contre le corps (8 ; 320), et une position d'ouverture dans laquelle un passage principal (37) est ménagé entre la soupape principale (32 ; 232 ; 332) et le corps (8 ; 320) pour la communication de fluide entre la chambre arrière et la chambre intermédiaire ;
- une soupape avant (30 ; 330), mobile en translation dans la chambre intermédiaire (26 ; 326) entre une position de fermeture et une position d'ouverture de l'orifice avant (18 ; 323), la soupape avant étant repoussée vers la position de fermeture par un premier ressort (80) ;
- une soupape de sécurité (34 ; 334), mobile en translation entre une position d'ouverture d'un passage secondaire (46 ; 344) ménagé à travers la soupape principale (32 ; 232 ; 332) entre la chambre arrière (24 ; 324) et la chambre intermédiaire (26 ; 326) et une position de fermeture du passage secondaire, dans laquelle la soupape de sécurité (34 ; 334) est en butée avant contre la soupape principale (32 ; 232 ; 332);
- un poussoir (54 ; 254 ; 336) mobile dans le corps (8 ; 320) entre une position avancée et une position reculée, le poussoir étant mobile par rapport à la soupape de sécurité (32 ; 232 ; 332) le long de l'axe longitudinal (X2 ; X304);
l'élément de raccord (2 ; 202 ; 304) étant agencé de telle sorte que, lors d'un accouplement avec un élément de raccord complémentaire (4 ; 204 ; 302) au cours duquel la soupape avant (30 ; 330) est déplacée vers sa position d'ouverture de l'orifice avant, la soupape avant vient au contact du poussoir (54 ; 254 ; 336) et déplace le poussoir vers la position reculée, le poussoir venant au contact de la soupape de sécurité (34 ; 334) et la déplaçant en position d'ouverture du passage secondaire (46 ; 344) avant que la soupape principale (32 ; 232 ; 332) ne soit déplacée vers sa position d'ouverture ;
l'élément de raccord (2 ; 202 ; 304) étant **caractérisé en ce que** :
- il comporte un deuxième ressort (66), disposé dans la chambre intermédiaire (26 ; 326) en appui sur le corps et sur une pièce d'appui (64, 352) du poussoir (54 ; 254 ; 336) et repoussant le poussoir (54 ; 254 ; 336) vers la position avancée,
- dans la position avancée du poussoir, la soupape principale (32 ; 232 ; 332) et la soupape de sécurité (34 ; 334) sont en position de fermeture, et le poussoir (54 ; 254 ; 336) est en butée avant contre la soupape principale (32 ; 232 ; 332) ou contre la soupape de sécurité (34 ; 334).

2. Elément de raccord (2 ; 202) selon la revendication 1, **caractérisé en ce que** dans la position avancée, le poussoir (54 ; 254) est en butée avant contre la soupape principale (32 ; 232 ; 332) et **en ce que** l'élément de raccord comporte un troisième ressort (50 ; 250) qui rappelle la soupape de sécurité (34 ; 334) dans sa position de fermeture du passage secondaire (46 ; 344).

3. Elément de raccord (2) selon la revendication 2, **caractérisé en ce que** le troisième ressort (50) est interposé entre la soupape de sécurité (34) et la soupape principale (32).

4. Elément de raccord (2) selon la revendication 2 ou la revendication 3, **caractérisé en ce que** le poussoir (54) est en butée avant contre la soupape principale (32) par l'intermédiaire d'au moins une bille (70) logée dans une rainure longitudinale (74) de la soupape principale (32) et dans une gorge périphérique (72) du poussoir (54).

5. Elément de raccord (302) selon la revendication 1, **caractérisé en ce que** dans la position avancée, le poussoir (336) est en butée avant contre la soupape de sécurité (334) et **en ce qu'**une tige avant (348) de la soupape de sécurité (334), dépassant en avant de la soupape principale (332), est engagée dans le poussoir (336).

6. Elément de raccord (2 ; 202 ; 302) selon l'une des revendications précédentes, **caractérisé en ce que** l'élément de raccord (2 ; 202 ; 304) est agencé de telle sorte que, lors d'un accouplement avec un élément de raccord complémentaire (4 ; 204 ; 302), le poussoir (54 ; 254 ; 336) ou la soupape de sécurité (34 ; 334) vient au contact de la soupape principale (32 ; 232 ; 332) pour déplacer la soupape principale depuis sa position de fermeture vers sa position d'ouverture.

7. Elément de raccord selon l'une des revendications précédentes, **caractérisé en ce que** le premier ressort (80) est disposé en appui sur la soupape avant (30 ; 330) et sur la pièce d'appui (64, 352) du poussoir (54 ; 254 ; 336).

8. Elément de raccord (2 ; 202 ; 302) selon la revendication 7, **caractérisé en ce que** le premier ressort (80) et le deuxième ressort (66) sont des ressorts hélicoïdaux à compression dont les spires sont alignées le long de l'axe longitudinal (X2 ; X304) et disposées en position radiale externe dans le conduit interne (16 ; 321).

9. Elément de raccord (2 ; 202 ; 302) selon l'une des revendications précédentes, **caractérisé en ce que** la force de rappel exercée par le deuxième ressort (66) lorsque le poussoir (54 ; 254 ; 336) est en position avancée est supérieure à la force de rappel exercée par le premier ressort (80) lorsque la soupape avant (30 ; 330) et la soupape principale (32 ; 232 ; 332) sont en position d'ouverture.

10. Elément de raccord (2 ; 202) selon l'une des revendications précédentes, **caractérisé en ce que** la pièce d'appui (64) du poussoir (54 ; 254) est adaptée pour guider radialement le poussoir à l'intérieur du corps (8) dans son mouvement entre la position avancée et la position reculée, la pièce d'appui (64) du poussoir étant placée sensiblement au milieu de la longueur libre (L1) du poussoir (54 ; 254) lorsque la soupape de sécurité (34) est en position ouverte.

11. Elément de raccord (2 ; 202 ; 302) selon l'une des revendications précédentes, **caractérisé en ce que** en position d'ouverture et en position de fermeture de l'orifice avant (18 ; 323), la soupape avant (30 ; 330) coopère avec le corps (8) ou avec un élément (328) solidaire du corps (320) avec un jeu radial (J1, J1') qui est inférieur à un jeu radial (J2) entre le corps (8), respectivement l'élément (328) solidaire du corps (320), et la soupape avant (30 ; 330) dans une position intermédiaire de la soupape avant (30 ; 330) entre la position de fermeture et la position d'ouverture de l'orifice avant (18 ; 323).

12. Elément de raccord (2 ; 202) selon l'une des revendications précédentes, **caractérisé en ce qu'**il comporte une pièce arrière (52) disposée dans la chambre arrière (24) et guidant radialement la soupape principale (32 ; 232), la pièce arrière (52) formant une butée arrière au déplacement de la soupape principale dans le corps (8).

13. Elément de raccord (2 ; 202 ; 302) selon l'une des revendications précédentes, **caractérisé en ce que** la soupape avant (30 ; 330) est apte à venir au contact du poussoir (54 ; 254 ; 336) uniquement dans une direction parallèle à l'axe longitudinal (X2 ; X304).

14. Elément de raccord (2 ; 202 ; 302) selon l'une des revendications précédentes, **caractérisé en ce que** la pièce d'appui (64 ; 352) est une pièce distincte du poussoir (54 ; 254 ; 336) qui est maintenue en butée avant contre le poussoir par le deuxième ressort (66).

15. Raccord (6 ; 206 ; 306) comportant un élément de raccord mâle (2 ; 202 ; 302) et un élément de raccord femelle (4 ; 204 ; 304) de formes complémentaires et aptes à s'emmancher l'un avec l'autre pour assurer une connexion fluidique d'un conduit interne (16 ; 312) de l'élément mâle avec un conduit interne (92 ; 321) de l'élément femelle, au moins un des raccords mâle et femelle étant selon l'une quelconque des revendications précédentes, **caractérisé en ce que** la somme :
- de la distance (D3) le long de l'axe longitudinal (X2 ; X304) entre la soupape avant (30 ; 330) en position de fermeture de l'orifice avant (18 ; 323) et le poussoir (54 ; 254 ; 336) en position avancée,
- et de la distance (D2) le long de l'axe longitudinal (X2) entre le poussoir (54 ; 254 ; 336) en position avancée et la soupape de sécurité (34 ; 334) en position de fermeture,
est supérieure à la course d'ouverture (C1) de la soupape avant (30 ; 330) pour la communication fluidique entre le conduit interne de l'élément mâle et le conduit interne de l'élément femelle.

## Patentansprüche

1. Fluidisches Kupplungselement (2; 202; 304), aufweisend:
- einen Körper (8; 320), der einen Innenkanal (16; 321) begrenzt, der sich entlang einer Längsachse (X2; X304) erstreckt, wobei der Innenkanal eine hintere Kammer (24; 324) und eine Zwischenkammer (26; 326), die an einer vorderen Öffnung (18; 323) des Innenkanals mündet, umfasst;
- ein Hauptventil (32; 232; 332), das translatorisch in der hinteren Kammer (24; 324) zwischen einer Verschlussstellung, in der das Hauptventil (32; 232; 332) im Anschlag gegen den Körper (8; 320) ist, und einer Offenstellung, in der ein Hauptdurchgang (37) zwischen dem Hauptventil (32; 232; 332) und dem Körper (8; 320) für die Fluidverbindung zwischen der hinteren Kammer und der Zwischenkammer eingearbeitet ist, beweglich ist;
- ein vorderes Ventil (30; 330), das translatorisch in der Zwischenkammer (26; 326) zwischen einer Verschlussstellung und einer Offenstellung der vorderen Öffnung (18; 323) beweglich ist, wobei das vordere Ventil in die Verschlussstellung durch eine erste Feder (80) gedrückt wird;
- ein Sicherheitsventil (34; 334), das translatorisch zwischen einer Offenstellung eines Nebendurchgangs (46; 344), der durch das Hauptventil (32; 232; 332) zwischen der hinteren Kammer (24; 324) und der Zwischenkammer (26; 326) eingearbeitet ist, und einer Verschlussstellung des Nebendurchgangs beweglich ist, in der das Sicherheitsventil (34; 334) im vorderen Anschlag gegen das Hauptventil (32; 232; 332) ist;
- ein Stößel (54; 254; 336), der in dem Körper (8; 23) zwischen einer vorgerückten Position und einer zurückgezogenen Position beweglich ist, wobei der Stößel in Bezug auf das Sicherheitsventil (32; 232; 332) entlang der Längsachse (X2; X304) beweglich ist;
wobei das Kupplungselement (2; 202; 304) derart ausgebildet ist, dass bei einem Kuppeln mit einem komplementären Kupplungselement (4; 204; 302), während dem das vordere Ventil (30; 330) in seine Offenstellung der vorderen Öffnung verschoben wird, das vordere Ventil in Kontakt mit dem Stößel (54; 254; 336) kommt und den Stößel in die zurückgezogenen Stellung verschiebt, wobei der Stößel in Kontakt mit dem Sicherheitsventil (34; 334) kommt und es in die Offenstellung des Nebendurchganges (46; 344) verschiebt, bevor das Hauptventil (32; 232; 332) in seine Offenstellung verschoben wird;
wobei das Kupplungselement (2; 202; 304) **dadurch gekennzeichnet ist, dass**:
- es eine zweite Feder (66) aufweist, die in der Zwischenkammer (26; 326) in Anlage an dem Körper und an ein Anlageteil (64; 352) des Stößels (54; 254; 336) angeordnet ist und den Stößel (54; 254; 336) in seine vorgerückte Position drückt,
- in der vorgerückten Position des Stößels das Hauptventil (32; 232; 332) und das Sicherheitsventil (34; 334) in der Verschlussstellung sind und der Stößel (54; 254; 336) im vorderen Anschlag gegen das Hauptventil (32; 232; 332) oder gegen das Sicherheitsventil (34; 334) ist.

2. Kupplungselement (2; 202) nach Anspruch 1, **dadurch gekennzeichnet, dass** in der vorgerückten Position der Stößel (54; 254) im vorderen Anschlag gegen das Hauptventil (32; 232; 332) ist und dass das Kupplungselement eine dritte Feder (50; 250) aufweist, die das Sicherheitsventil (34; 334) in seine Verschlussstellung des Nebendurchgangs (46; 344) zurückbringt.

3. Kupplungselement (2) nach Anspruch 2, **dadurch gekennzeichnet, dass** die dritte Feder (50) zwischen dem Sicherheitsventil (34) und dem Hauptventil (32) liegt.

4. Kupplungselement (2) nach Anspruch 2 oder Anspruch 3, **dadurch gekennzeichnet, dass** der Stößel (54) im vorderen Anschlag gegen das Hauptventil (32) mithilfe mindestens einer Kugel (70) ist, die in einer Längsnut (74) des Hauptventils (32) und einer Umfangskehle (72) des Stößels (54) lagert.

5. Kupplungselement (2) nach Anspruch 1, **dadurch gekennzeichnet, dass** in der vorgerückten Position der Stößel (336) im vorderen Anschlag gegen das Sicherheitsventil (334) ist und dass ein vorderer Stab (348) des Sicherheitsventils (334), der zu dem Hauptventil (332) nach vorn übersteht, in den Stößel (336) eingreift.

6. Kupplungselement (2; 202; 302) nach einem der vorhergehenden Ansprüche, **dadurch gekennzeichnet, dass** das Kupplungselement (2; 202; 304) derart ausgebildet ist, dass bei einem Kuppeln mit einem komplementären Kupplungselement (4; 204; 302) der Stößel (54; 254; 336) oder das Sicherheitsventil (34; 334) in Kontakt mit dem Hauptventil (32; 232; 332) zum Verschieben des Hauptventils von seiner Verschlussstellung in seine Offenstellung kommt.

7. Kupplungselement nach einem der vorhergehenden Ansprüche, **dadurch gekennzeichnet, dass** die erste Feder (80) in Anlage an dem vorderen Ventil (30; 330) und an dem Anlageteil (64, 352) des Stößels (54; 254; 336) angeordnet ist.

8. Kupplungselement (2; 202; 302) nach Anspruch 7, **dadurch gekennzeichnet, dass** die erste Feder (80) und die zweite Feder (66) Spiraldruckfedern sind, deren Windungen entlang der Längsachse (X2; X304) ausgerichtet sind und in einer radialen äußeren Position in dem Innenkanal (16; 321) angeordnet sind.

9. Kupplungselement (2; 202; 302) einem der vorhergehenden Ansprüche, **dadurch gekennzeichnet, dass** die von der zweiten Feder (66) ausgeübte Rückstellkraft, wenn der Stößel (54; 254; 336) in seiner vorgerückten Position ist, größer als die von der ersten Feder (80) ausgeübte Rückstellkraft ist, wenn das vordere Ventil (30; 330) und das Hauptventil (32; 232; 332) in der Offenstellung sind.

10. Kupplungselement (2; 202) nach einem der vorhergehenden Ansprüche, **dadurch gekennzeichnet, dass** das Anlageteil (64) des Stößels (54; 254) angepasst ist, radial den Stößel im Inneren des Körpers (8) in seiner Bewegung zwischen der vorgerückten Position und der zurückgezogenen Position zu führen, wobei das Anlageteil (64) des Stößels im Wesentlichen in der Mitte der freien Länge (L1) des Stößels (54; 254) liegt, wenn das Sicherheitsventil (34) in der Offenstellung ist.

11. Kupplungselement (2; 202; 302) nach einem der vorhergehenden Ansprüche, **dadurch gekennzeichnet, dass** in der Offenstellung und in der Schließstellung der vorderen Öffnung (18; 323) das vordere Ventil (30; 330) mit dem Körper (8) oder mit einem mit dem Körper (320) verbundenen Element (328) mit einem radialen Spiel (J1, J1') zusammenarbeitet, das geringer ist als ein radiales Spiel (J2) zwischen dem Körper (8) bzw. dem mit dem Körper (320) verbundenen Element (328) und dem vorderen Ventil (30; 330) in einer Zwischenstellung des vorderen Ventils (30; 330) zwischen der Verschlussstellung und der Offenstellung der vorderen Öffnung (18; 323).

12. Kupplungselement (2; 202) nach einem der vorhergehenden Ansprüche, **dadurch gekennzeichnet, dass** es ein hinteres Teil (52) aufweist, das in der hinteren Kammer (24) angeordnet ist und radial das Hauptventil (32; 232) führt, wobei das hintere Teil (52) einen hinteren Anschlag für die Bewegung des Hauptventils in dem Körper (8) bildet.

13. Kupplungselement (2; 202; 302) nach einem der vorhergehenden Ansprüche, **dadurch gekennzeichnet, dass** das vordere Ventil (30; 330) geeignet ist, in Kontakt mit dem Stößel (54; 254; 336) nur in einer Richtung parallel zu Längsachse (X2; X304) zu kommen.

14. Kupplungselement (2; 202; 302) nach einem der vorhergehenden Ansprüche, **dadurch gekennzeichnet, dass** das Anlageteil (64; 352) ein zum Stößel (54; 254; 336) getrenntes Teil ist, das im vorderen Anschlag gegen den Stößels durch eine zweite Feder (66) gehalten wird.

15. Kupplung (6; 206; 306), die ein Kupplungseinsteckelement (2; 202; 302) und ein Kupplungsaufnahmeelement (4; 204; 304) in komplementären Formen aufweist, die geeignet sind, ineinander gesteckt zu werden, um eine Fluidverbindung eines Innenkanals (16; 312) des Einsteckelementes mit einem Innenkanal (92; 321) des Aufnahmeelementes sicherzustellen, wobei mindestens eines des Kupplungseinsteckelementes und Kupplungsaufnahmeelementes nach einem beliebigen der vorhergehenden Ansprüche ausgebildet ist, **dadurch gekennzeichnet, dass** die Summe:
- des Abstandes (D3) entlang der Längsachse (X2; X304) zwischen dem vorderen Ventil (30; 330) in der Verschlussstellung der vorderen Öffnung (18; 323) und dem Stößel (54; 254; 336) in der vorgerückten Position,
- und des Abstandes (D2) entlang der Längsachse (X2) zwischen dem Stößel (54; 254; 336) in der vorgerückten Position und dem Sicherheitsventil (34; 334) in der Verschlussstellung größer ist als der Öffnungsweg (C1) des vorderen Ventils (30; 330) für die Fluidverbindung zwischen dem Innenkanal des Einsteckelementes und dem Innenkanal des Aufnahmeelementes.

## Claims

1. A fluid coupling element (2; 202; 304), including:
- a body (8; 320) that delimits an inner pipe (16; 321) extending along a longitudinal axis (X2; X304), the inner pipe comprising a rear chamber (24; 324) and an intermediate chamber (26; 326), in which a front orifice (18; 323) of the inner pipe emerges;
- a main valve (32; 232; 332) translatable in the rear chamber (24; 324) between a closed position, in which the main valve (32; 232; 332) abuts forwardly against the body (8; 320), and an open position in which a main passage (37) is arranged between the main valve (32; 232; 332) and the body (8; 320) for the fluid communication between the rear chamber and the intermediate chamber;
- a forward valve (30; 330), translatable in the intermediate chamber (26; 326) between a closed position and an open position of the front orifice (18; 323), the forward valve being pushed back toward the closed position by a first spring (80);
- a safety valve (34; 334), translatable between an open position of a secondary passage (46; 344) arranged through the main valve (32; 232; 332) between the rear chamber (24; 324) and the intermediate chamber (26; 326) and a closed position of the secondary passage, in which the safety valve (34; 334) abuts forwardly against the main valve (32; 232; 332);
- a plunger (54; 254; 336) movable in the body (8; 320) between a forward position and a withdrawn position, the plunger being movable relative to the safety valve (32; 232; 332) along the longitudinal axis (X2; X304);
the coupling element (2; 202; 304) being arranged such that, during coupling with a complementary coupling element (4; 204; 302) during which the forward valve (30; 330) is moved toward its open position of the front orifice, the forward valve comes into contact with the plunger (54; 254; 336) and moves the plunger toward the withdrawn position, the plunger coming into contact with the safety valve (34; 334) and moving it into the open position of the secondary passage (46; 344) before the main valve (32; 232; 332) is moved toward its open position;
the coupling element (2; 202; 304) being **characterized in that**:
- it includes a second spring (66), arranged in the intermediate chamber (26; 326) bearing on the body and on a bearing part (64; 352) of the plunger (54; 254; 336) and pushing the plunger (54; 254; 336) back toward the forward position,
- in the forward position of the plunger, the main valve (32; 232; 332) and the safety valve (34; 334) are in the closed position, and the plunger (54; 254; 336) abuts forwardly against the main valve (32; 232; 332) or against the safety valve (34; 334).

2. The coupling element (2; 202) according to claim 1, **characterized in that** in the forward position, the plunger (54; 254) abuts forwardly against the main valve (32; 232; 332) and **in that** the coupling element includes a third spring (50; 250) that returns the safety valve (34; 334) into its closed position of the secondary passage (46; 344).

3. The coupling element (2) according to claim 2, **characterized in that** the third spring (50) is inserted between the safety valve (34) and the main valve (32).

4. The coupling element (2) according to claim 2 or claim 3, **characterized in that** the plunger (54) abuts forwardly against the main valve (32) by means of at least one ball (70) housed in a longitudinal slot (74) of the main valve (32) and in a peripheral groove (72) of the plunger (54).

5. The coupling element (302) according to claim 1, **characterized in that** in the forward position, the plunger (336) abuts forwardly against the safety valve (334) and **in that** a forward rod (348) of the safety valve (334), protruding in front of the main valve (332), is engaged in the plunger (336).

6. The coupling element (2; 202; 302) according to one of the preceding claims, **characterized in that** the coupling element (2; 202; 304) is arranged such that, during coupling with a complementary coupling element (4; 204; 302), the plunger (54; 254; 336) or the safety valve (34; 334) comes into contact with the main valve (32; 232; 332) to move the main valve from its closed position toward its open position.

7. The coupling element according to one of the preceding claims, **characterized in that** the first spring (80) is arranged bearing on the forward valve (30; 330) and on the bearing part (64; 352) of the plunger (54; 254; 336).

8. The coupling element (2; 202; 302) according to claim 7, **characterized in that** the first spring (80) and the second spring (66) are helical compression springs, the turns of which are aligned along the longitudinal axis (X2; X304) and arranged in the outer radial position in the inner pipe (16; 321).

9. The coupling element (2; 202; 302) according to one of the preceding claims, **characterized in that** the return force exerted by the second spring (66) when the plunger (54; 254; 336) is in the forward position is greater than the return force exerted by the first spring (80) when the forward valve (30; 330) and the main valve (32; 232; 332) are in the open position.

10. The coupling element (2; 202) according to one of the preceding claims, **characterized in that** the bearing part (64) of the plunger (54; 254) is suitable for radially guiding the plunger inside the body (8) in its movement between the forward position and the withdrawn position, the bearing part (64) of the plunger being placed substantially in the middle of the free length (L1) of the plunger (54; 254) when the safety valve (34) is in the open position.

11. The coupling element (2; 202; 302) according to one of the preceding claims, **characterized in that** in the open position and in the closed position of the front orifice (18; 323), the forward valve (30; 330) cooperates with the body (8) or with an element (328) secured to the body (320) with a radial play (J1, J1') that is smaller than a radial play (J2) between the body (8), respectively the element (328) secured to the body (320), and the forward valve (30; 330) in an intermediate position of the forward valve (30; 330) between the closed position and the open position of the front orifice (18; 323).

12. The coupling element (2; 202) according to one of the preceding claims, **characterized in that** it includes a rear part (52) arranged in the rear chamber (24) and radially guiding the main valve (32; 232), the rear part (52) forming a rear stop to the movement of the main valve in the body (8).

13. The coupling element (2; 202; 302) according to one of the preceding claims, **characterized in that** the forward valve (30; 330) is able to come into contact with the plunger (54; 254; 336) only in a direction parallel to the longitudinal axis (X2; X304).

14. The coupling element (2; 202; 302) according to one of the preceding claims, **characterized in that** the bearing part (64; 352) is a part separate from the plunger (54; 254; 336) that is kept abutting against the plunger by the second spring (66).

15. A coupling device (6; 206; 306) including a male coupling element (2; 202; 302) and a female coupling element (4; 204; 304) with complementary shapes and able to fit in one another to guarantee a fluid connection of an inner pipe (16; 312) of the male element with an inner pipe (92; 321) of the female element, at least one of the male and female coupling devices being as previously described, and the sum of:
- the distance (D3) along the longitudinal axis (X2; X304) between the forward valve (30; 330) in the closed position of the front orifice (18; 323) and the plunger (54; 254; 336) in the forward position, and
- the distance (D2) along the longitudinal axis (X2) between the plunger (54; 254; 336) in the forward position and the safety valve (34; 334) in the closed position, is greater than the opening travel (C1) of the forward valve (30; 330) for the fluid communication between the inner pipe of the male element and the inner pipe of female element.
